# EUROPEAN PATENT SPECIFICATION

(11) **EP 1 734 339 B1**
(45) Date of publication and mention of the grant of the patent: **19.12.2012**
(21) Application number: 04724159.1
(22) Date of filing: 29.03.2004
(51) Int. Cl.: G01C 21/36, G01C 21/32, G08G 1/137

(54) **NAVIGATION SYSTEM AND COURSE GUIDING METHOD**
NAVIGATIONSSYSTEM UND KURSLENKVERFAHREN
SYSTEME DE NAVIGATION ET PROCEDE DE GUIDAGE DE DEPLACEMENT

(43) Date of publication of application: 20.12.2006
(73) Proprietor: HITACHI, LTD., Chiyoda-ku Tokyo 100-8280 (JP)
(72) Inventor: KATO, Manabu, Chiyoda-ku Tokyo 100-8220 (JP); ATARASHI, Yoshitaka, Chiyoda-ku Tokyo 100-8220 (JP); TANIZAKI, Masaaki, Chiyoda-ku Tokyo 100-8220 (JP)
(74) Representative: MERH-IP Matias Erny Reichl Hoffmann
(86) International application number: PCT/JP2004/004401
(87) International publication number: WO 2005/093372

(56) References cited:
- JP-A- 05 053 498
- JP-A- 07 037 067
- JP-A- 09 304 106
- JP-A- 2002 206 940
- JP-A- 2003 240 583

## Description

### TECHNICAL FIELD

The present invention relates to a route guiding technology for a navigation apparatus.

### BACKGROUND ART

Japanese laid-open patent application publication No. 2001-273526 discloses a navigation apparatus capable of stereoscopically displaying a map around its own vehicle, a destination, an intersection to be guided, and the like. Further, Japanese laid-open patent application publication No. 2002-206928 discloses a navigation apparatus capable of displaying an enlarged map in a vicinity of its-own vehicle and a map of a wide area from the current place to a destination.

### DISCLOSURE OF THE INVENTION

The navigation apparatus described in the document mentioned above can provide a user with a map of a desired area such as a vicinity of a user's vehicle through a display screen in detail. However, if the map is displayed as it is, there may be a case that a guiding route having a complicated road shape cannot be recognized rapidly. Accordingly, to rapidly recognize the guiding route, it is desired to simplify the road shape of the guiding route.

JP-A-2002-206940 discloses apparatuses and methods according the preambles of the independend claims.

On the other hand, if the road shape of the guiding route is simplified, there may be a possibility that a guiding direction may be erroneously recognized because a difference from a shape of an actually traveling road becomes large.

The present invention has been developed in consideration of the above-mentioned circumstances, and an object of the present invention is to improve a visibility of the guiding route and reduce a possibility that the guiding direction is erroneously recognized.

To solve the above-mentioned problem, in the present invention, on the basis of map data is generated shape-simplified road map data which includes at least a guiding route and a road intersecting the guiding route and in which a shape of the roads on the guiding route is simplified. In addition, a part of the guiding route having a difference greater than a predetermined quantity is detected as a notice part by comparing the shape of the roads on the guiding route in the shape-simplified road map data (after simplifying) with the shape (before simplifying) of the road on the guiding route in the map data. Then, guidance notice information is generated on the basis of the difference between the shape-simplified road map data and the map data for the notice part.

For example, a first mode of a navigation apparatus according to the present invention is a navigation apparatus for transmitting information of a guiding route to a navigation terminal for performing route guidance of a moving object, including: communication means for performing communication with the navigation terminal; map data storing means for storing map data; route searching means for searching, using the map data, a guiding route between a departure place and a destination received from the navigation terminal through the communication means; shape-simplified road map data generating means for generating, using the map data, shape-simplified road map data which includes at least the guiding route and a road intersecting the recommended route and in which a road shape of the guiding route is simplified; notice part detecting means for detecting as a notice part a part of the guiding route having a difference greater than a predetermined quantity between a shape of the guiding route in the map data and the shape of the guiding route in the shape-simplified road map data; guidance notice information generating means for generating, on the basis of the difference at the notice part between the map data and the shape-simplified road map data, guidance notice information to be supplied to the navigation terminal when the moving object reaches the notice part in the route guidance; and information delivering means for transmitting delivery information including the shape-simplified road map data and the guidance notice information to the navigation terminal using the communication means.

Further, a second mode of a navigation apparatus according to the present invention is a navigation apparatus for performing route guidance of a moving object, including: map data storing means for storing map data; setting means for receiving settings of a departure place and a destination; route searching means for searching, using the map data, a guiding route between the departure place and the destination; shape-simplified road map data generating means for generating, using the map data, shape-simplified road map data which includes at least the guiding route and a road intersecting the recommended route and in which a road shape of the guiding route is simplified; notice part detecting means for detecting as a notice part a part of the guiding route having a difference greater than a predetermined quantity between a shape of the guiding route in the map data and the shape of the guiding route in the shape-simplified road map data; and guidance notice information generating means for generating, on the basis of the difference at the notice part between the map data and the shape-simplified road map data, guidance notice information to be supplied to the navigation terminal when the moving object reaches the notice part in the route guidance.

According to the present invention, the shape-simplified road map data is generated in which a road shape of the guiding route is simplified. In addition, out of the guiding route indicated by the shape-simplified road map data, the guidance notice information according to the difference is generated for the notice part having the difference in shape of the guiding route indicated by the map data. Accordingly, displaying the road map according to the shape-simplified road map data can improve the visibility of the guiding route. Further, at the notice part of the guiding route, outputting the guiding notice information can reduce a possibility of an error in guiding direction.

### BRIEF DESCRIPTION OF DRAWINGS

Fig. 1 is an outline drawing of a navigation system in which an embodiment of the present invention is used.
Fig. 2 is a drawing for illustrating an example of registered content in a POI table 1011.
Fig. 3 is a drawing for illustrating an example of registered content in a category table 1012.
Fig. 4 is a drawing for illustrating an example of registered content in an area table 1013.
Fig. 5 is a drawing for illustrating an example of registered content in a road table 1021.
Fig. 6 is a drawing for illustrating an example of registered content in a road category table 1022.
Fig. 7 is a drawing for illustrating an example of registered content in a link table 1023.
Fig. 8 is a drawing for illustrating an example of registered content in a background table 1024.
Fig. 9 is a drawing for illustrating an example of registered content in a background category table 1025.
Fig. 10 is a drawing for illustrating an example of registered contents in a POI-link relating table 1026.
Fig. 11 is a flowchart for illustrating an operation of a navigation server.
Fig. 12 is a flowchart for illustrating a generating process of outline road map data shown in S3 in Fig. 11.
Fig. 13 is a drawing for showing an example of an outline road map indicated by outline road map data.
Fig. 14 is a flowchart for illustrating a generating method of simplified outline road map data shown in S4 in Fig. 4.
Fig. 15 is a flowchart for illustrating a linearizing process in S401 shown in Fig. 14.
Fig. 16 is a drawing for showing steps in the linearizing process.
Fig. 17 is a flowchart for illustrating an orthogonalizing and direct-advancing process in S402 shown in Fig. 14.
Fig. 18 is a drawing for showing the orthogonalizing and direct-advancing process.
Fig. 19 is a flowchart for illustrating the making-it-horizontal-and-vertical process in S403 shown in Fig. 14.
Fig. 20 is a drawing for showing the making-it-horizontal-and-vertical process.
Fig. 21 is a drawing for showing an example of the shape-simplified road map indicated by the shape-simplified road map data generated on the basis of the outline road map data shown in Fig. 13.
Fig. 22 is a flowchart for illustrating the route guidance information generating process shown in S5 of Fig. 11.
Fig. 23 is a flowchart for illustrating the shape deviation calculating process in S504 of Fig. 22.
Fig. 24 is a drawing for showing the shape deviation calculating process.
Fig. 25 is a flowchart for illustrating the guidance notice information generating process shown in S506 of Fig. 22.
Fig. 26 is a drawing showing a guidance notice information generation process.
Fig. 27 is a flowchart for illustrating an operation of a navigation terminal 2.
Fig. 28 is a flowchart for illustrating a route guiding process shown in S15 of Fig. 27.
Fig. 29 is a flowchart for illustrating a map matching process shown in S1501 of Fig. 28.
Fig. 30 is a drawing for illustrating a determining process of a current place for displaying.
Fig. 31 is a drawing for showing a display example of the shape-simplified road map.
Fig. 32 is a drawing for showing an output example of guidance notice information of the navigation terminal 2.
Fig. 33 is a drawing for showing an example of displaying the shape-simplified road map when deviating from the route.

### BEST MODE FOR CARRYING OUT THE INVENTION

Hereinbelow will be described an embodiment of the present invention.

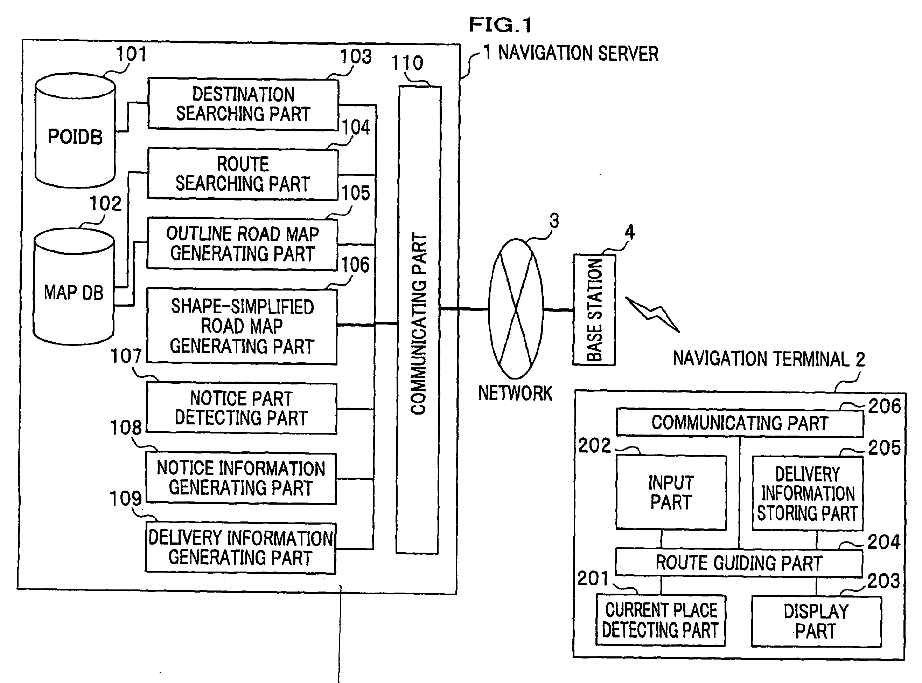

Fig. 1 is an outline drawing of a navigation system in which an embodiment of the present invention is used.

As shown in the drawing, the navigation system according to the embodiment is configured by connecting a navigation server 1 and the navigation terminal 2 each other through a network 3. Here, the navigation terminal 2 is connected to the network 3 through a wireless base station 4.

First, will be described the navigation server 1.

The navigation server 1 performs a searching process for a guiding route in accordance with an instruction from the navigation terminal 2 and then transmits information of the guiding route as a result of the process to the navigation terminal 2. As shown in Fig. 1, the navigation server 1 includes a POI (Point Of Interest) database (DB) 101, a map database 102, a destination searching part 103, a route searching part 104, an outline road map generating part 105, a shape-simplified road map generating part 106, a notice part detecting part 107, a notice information generating part 108, a delivery information generating part 109, and a communicating part 110 for executing communication with the navigation terminal 2 through the network 3.

Information of the POI which may become a candidature of the destination is registered in the POI database 101. The POI database 101 has a POI table 1011, a category table 1012, and an area code table 1013.

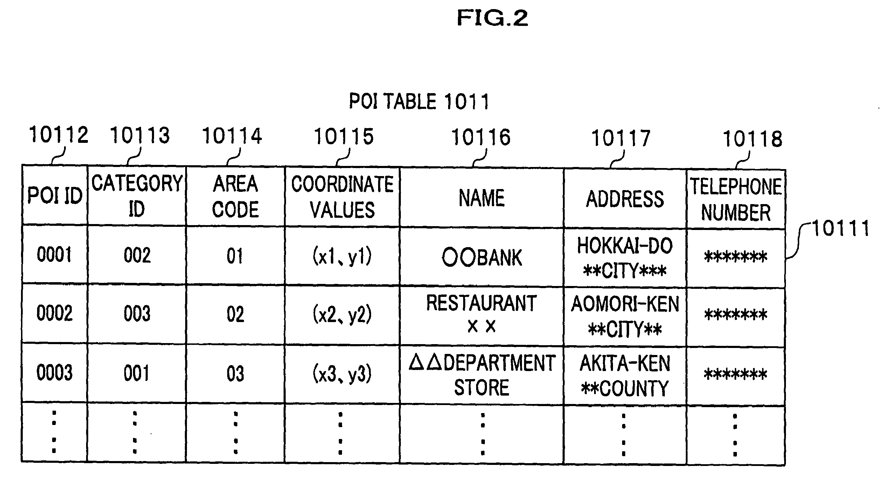

Fig. 2 is a drawing for illustrating an example of a registered content in the POI table 1011. In the POI table 1011, records 10111 of the POI are registered. The records 10111 of the POI include a field 10112 for registering an ID of the POI (identification information: POI ID), a field 10113 for registering an ID of a category to which the POI belongs (category ID), a field 10114 for registering an area code of an area to which the POI belongs, a field 10115 for registering coordinate values of the POI, a field 10116 for registering a facility name of the POI, a field 10117 for registering an address of the POI, and a field 10118 for registering a telephone number of a facility of the POI.

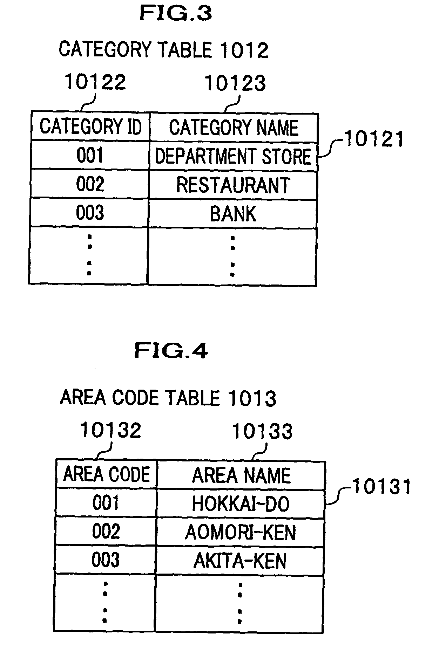

Fig. 3 is a drawing for illustrating an example of registered content of the category table 1012. As shown in the drawing, in the category table 1012, records 10121 of the category are registered. The record 10121 of the category has a field 10122 for registering the category ID, and a field 10123 for registering a name of the category.

Fig. 4 is a drawing for illustrating an example of a registered content in the area table 1013. As shown in the drawing, in the area table 1013, records 10131 of the areas are registered. The records 10131 of the areas have a field 10132 for registering the area code and a field 10133 for registering a name of the area.

In the map database 102, information of roads and backgrounds forming a map is registered. The map database 102 has a road table 1021, a road category table 1022, a link table 1023, a background table 1024, a background category table 1025, and a POI-link relating table 1026.

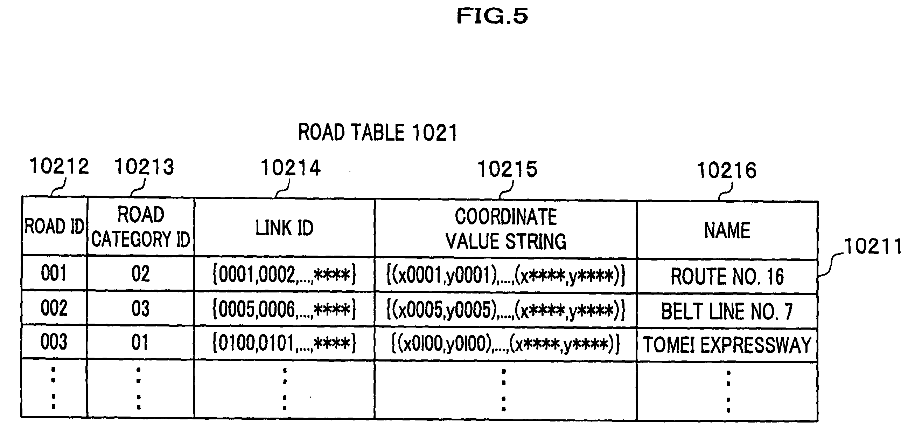

Fig. 5 is a drawing for illustrating an example of a registered content of the road table 1021. As shown in the drawing, in the road table 1021, records 10211 of respective roads forming a map are registered. The records 10211 of roads have a field 10212 for registering an ID of the road (road ID), a field 10213 for registering an ID of category to which the road belong (road category ID), a field 10215 for identifying a coordinate value string for identifying a road shape for drawing, and a field 10216 for registering a name of the road.

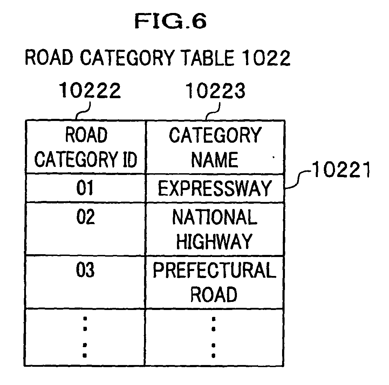

Fig. 6 is a drawing for illustrating an example of a registered content in the road category table 1022. As shown in the drawing, in the road category table 1022, records 10221 of the road category are registered. The records 10221 of the road category have a field 10222 for registering the road category ID and a field 10223 for registering a name of the road category.

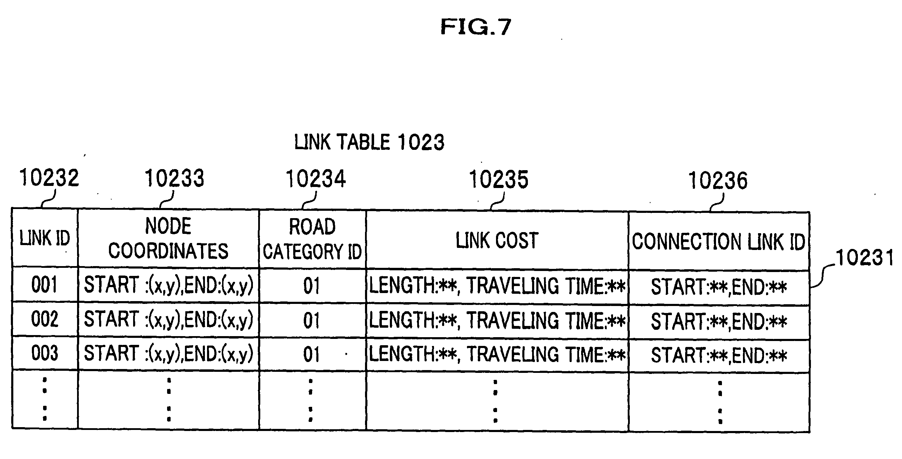

Fig. 7 is a drawing for illustrating an example of a registered content of the link table 1023. As shown in the drawing, in the link table 1023, records 10231 of links forming the road are registered. The records 10231 of the links have a field 10232 for registering a link ID, a field 10233 for registering coordinate values of two nodes (a start node and an end node) forming the link, a filed 10234 for registering the road category ID of the road including the links, a field 10235 for registering costs such as a traveling time duration, and a field 10236 for registering the link ID of the link (a start connection link, an end connection link). Further, the coordinate values of the start and end nodes of the link registered in the field 10233 accord with the coordinate values of the start and end nodes of the link registered in the coordinate value string of the road table 1021 shown in Fig. 5.

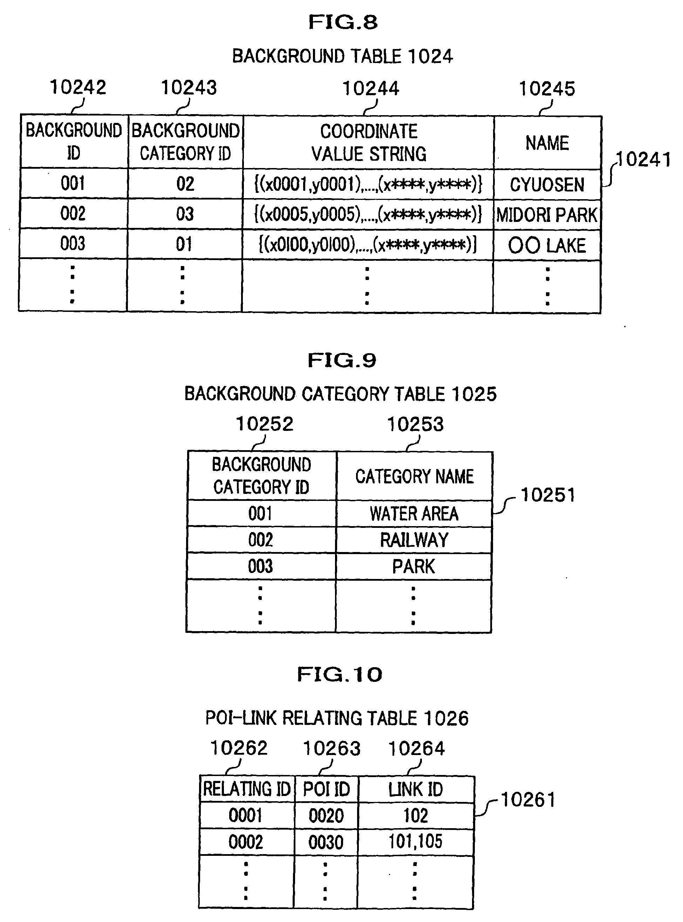

Fig. 8 is a drawing for illustrating an example of a registered content of the background table 1024. As shown in the drawing, in the background table 1024 are registered records 10241 of backgrounds used for drawing the map. The records 10241 of the backgrounds include a field 10242 for registering an ID of the background, a field 10243 for registering an ID of category to which the background belong (background category ID), a filed 10244 for identifying a coordinate string for identifying a background shape for drawing, and a field 10245 for registering a name of the background.

Fig. 9 is a drawing for illustrating an example of a registered content of a background category table 1025. As shown in the drawing, in the background category table 1025 are registered records 10251 of the background categories. The records 10251 of the background categories have a field 10252 for registering a background category ID and a field 10253 for registering a name of the background category.

Fig. 10 is a drawing for illustrating an example of a registered content of the POI-link relating table 1026. As shown in the drawing, in the POI-link relating table 1026 are registered a POI-link relating records 10261 for identifying a link related as a link (destination link) directly connected to the destination when the POI is determined as the destination. The POI-link relating records 10261 have a field 10262 for registering an ID for relating the POI-link (relating ID), a field 10263 for registering a POI ID, and a field 10264 for registering the link ID.

The destination searching part 103 searches the POI meeting a condition received from the navigation terminal 2 through a communicating part 110 using the POI database 101 and then transmits a search result to the navigation terminal 2 through the communicating part 110.

The route searching part 104 searches a recommended route between two points (a departure place, a destination) received from the navigation terminal 2 through the communicating part 110 using the map database 102.

The outline road map generating part 105 generates outline road map data of an area including the recommended route searched by the route searching part 104 with the map database 102. Here the outline road map is a map in which roads other than roads forming the recommended rout and roads intersecting the recommended route are omitted as well as POI located near the roads forming the recommended route and the roads intersecting the recommended route, POI other than the background, and the background are omitted. In guiding along the route, a visibility is improved by omitting information having no direct relation with the guiding route (recommended route).

The shape-simplified road map generating part 106 generates the shape-simplified road map data on the basis of the outline road map data generated by the outline road map generating part 105. Here, the shape-simplified road map is a map in which shapes of roads of the recommended route and roads intersecting the recommended route, indicated by the outline road map are simplified. In the outline road map are shown the recommended route and the roads intersecting the recommended route in simplified shapes mainly using straight lines. Further many intersections are shown in orthogonal shapes.

The notice part detecting part 107 compares the outline road map data generated by the outline road map generating part 105 with the shape-simplified road map data generated by the shape-simplified road map generating part 106 and detects a part of the recommended route having a difference in a road shape of the recommended route (a deviation in the road shape of the recommended route indicated by the shape-simplified road map data generated by the shape-simplified road map generating part 106 from the road shape of the recommended route indicated by the outline road map data generated by the outline road map generating part 105) greater than a predetermined quantity as a notice part particularly requiring a notice in guiding the route.

The notice information generating part 108 generates guidance notice part information for describing the difference between the outline road map data generated by the outline road map generating part 105 and the shape-simplified road map data generated by the shape-simplified road map generating part 106. Here, the guidance notice information is, in route guidance, information outputted by the navigation terminal 2 to prevent a user of a moving object from making an error in the guiding direction when the moving object reaches the notice part.

The delivery information generation part 109 generates delivery information including the outline road map data generated by the outline road map generating part 105, the shape-simplified road map data generated by the shape-simplified road map generating part 106, and the guidance notice part information generated by the notice part information generating part 108 to transmit delivery information to the navigation terminal 2 through the communicating part 110.

The above-mentioned navigation server 1 is provided in a computer including a CPU, a memory, an external storage device such as a HDD, and a network interface for performing communication with the network 3 by executing a program stored in the external storage device by the CPU. In this case, the external storage device is used for the POI database 101 and the map DB 102 and the network interface is used for the communicating part 110.

Next will be described an operation of the navigation server 1.

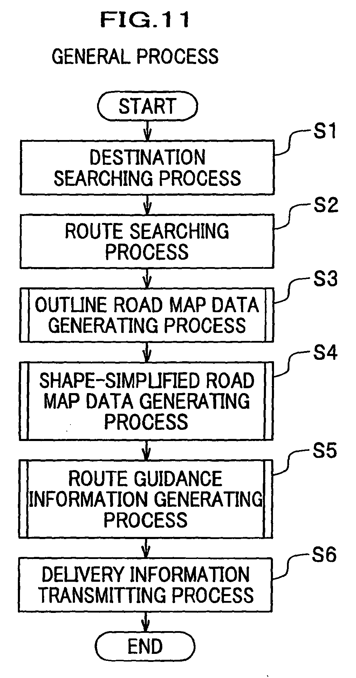

Fig. 11 is a flowchart for illustrating the operation of the navigation server 1. The flow is started when the communicating part 110 receives a route guiding request from the navigation terminal 2 through the network 3.

First, the destination searching part 103 searches, using the POI database 101, a POI meeting a searching condition of a designation received from the navigation terminal 2 through the communicating part 110 and then transmits the search result to the navigation terminal 2 through the communicating part 110 (S1).

More specifically, the destination searching part 103 transmits to the navigation terminal 2 through the communicating part 110 a list of category names registered in the category table 1012 and a list of area names registered in the area code table 1013, in the POI database 101 and then makes the navigation terminal 2 display an input screen image of a destination searching condition to receive the destination searching condition from the user of the navigation through the input screen image. The input screen image of the destination searching condition is formed to select a desired category and area names from each of the lists of the category names and the area names. Further, there are provided blanks for a name and address of the POI. The destination searching part 103 receives any one of the category name, the area name, the name of the POI, and the address of the POI as the destination searching condition from the user of the navigation terminal 2 through the input screen image.

Next, the destination searching part 103 searches the POI table 1011 for a record 10111 of the POI meeting the destination searching condition. For example, if the destination searching condition includes the category name, the category ID of the category name is identified with the category table 1012, and the POI table 1011 is searched for the record 10111 of the POI having the identified category ID. Further, if the destination searching condition includes the area name, the area code of the area name is identified with the area code table 1013, and the POI table 1011 is searched for a record 10111 of the POI having the identified area code. Further, if the destination searching condition includes the name of the POI, the POI table 1011 is searched for the record 10111 of the POI having the name. Further, if the destination searching condition includes the address of the POI, the POI table 1011 is searched for a record 10111 of the POI having the corresponding address. Further, if the destination searching condition includes more than one condition, the POI table 1011 is searched for the record 10111 of the POI meeting all of these conditions.

Next, when the destination searching part 103 searched the record 10111 of the POI meeting the destination searching condition, the destination searching part 103 transmits these records 10111 as information of candidates of the destination to the navigation terminal 2 through the communicating part 110, and then causes the user of the navigation terminal 2 to select the record 1011 of the POI to be set as the destination from the candidates of the destinations.

Next, the rout searching part 104 searches with the map database 102 the recommended route between the two points (the departure place and the destination) received from the navigation terminal 2 through the communicating part 110 (S2).

More specifically, the route searching part 104 receives settings of the departure place (current place) and the destination from the navigation terminal 2 through the communicating part 110. Next, the route searching part 104 identifies a destination link related with the POI set as the destination with the POI-link relating table 1026, and identifies a link (departure link) located at the departure place or near the departure place with the link table 1023. Next, the route searching part 104 searches a link string (the recommended route) having a minimum sum of desired link costs (a link length, the link traveling time duration, and the like) connecting the departure link and the destination link with the link table 1023 by for example, Dijkstra method.

Next, the outline road map generating part 105 generates the outline road map data of an area including the recommended route searched by the rout searching part 104 with the map database 102 (S3).

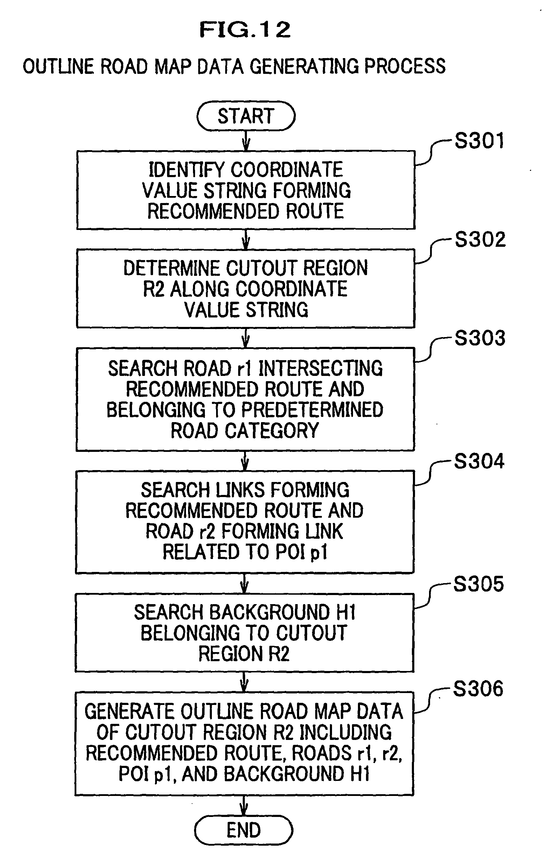

Fig. 12 is a flowchart for illustrating a generation process of the outline road map data shown by the S3 in Fig. 11.

First, the outline road map generating part 105 identifies a coordinate value string of the recommended route (link string) searched by the route searching part 104 with the road table 1021 (S301). More specifically, this is done as follows. First, one link is successively extracted from the link string representing the recommended route. After that, the record 10231 of the link having the link ID of the extracted link is searched to identify start node coordinate values and end node coordinate values of the link. Next, the road table 1021 is searched for the record 10211 of the road having the link ID of the extracted link. Next, the coordinate value string from the start node coordinate values to the end node coordinate values from the field 10215 of the searched record 1021 is identified to determine the coordinate value string as the coordinate value string of the extracted link. This process is executed for all links forming the recommended route to identify the coordinate value string of the recommended route by connecting coordinate value strings of respective links. Further, each of the coordinate values forming the coordinate value string of the recommend route is caused to have, for management mentioned later, correspondence between the identification information (coordinate value ID) indicating an order of connection on the recommended route and the link ID to which the coordinate values belong.

Next, the outline road map generating process part 105 determines a cutout region R2 along the coordinate value string of the recommended route (S302), more specifically, determines an area (or an area mesh) within a predetermined distance from the coordinate value string of the recommended route as the cutout region R2.

Next, the outline road map generating process part 105 searches a road r1 intersecting the recommended road and belonging to a predetermined road category (S303). More specifically, this is done as follows. First, one link is successively extracted from the link string indicating the recommended route. Next, the link table 1023 is searched for the record 10231 of the link having the link ID of the extracted link to identify the link ID of the end connection link of the link. Next, it is checked whether the link having the identified link ID is included in the link string indicating the recommended route. If it is not included, the link table 1023 is searched for a record 10231 of the link having the link ID of the end connection link, and it is further checked whether the road category ID of the link is a predetermined road category (for example, easy to use roads (easy to travel) such as an expressway, a national highway, a prefectural road). If it is one of the road category ID of the predetermined road categories, the road table 1021 is searched for the record 10211 of the road having the link ID of the end connection link, and a road identified by the record 10211 of the searched road is determined as the road r1. This process is done for all links forming the recommended route.

Next, the outline road map generating process part 105 searches a road r2 including the link related to the POI p1 related to the links forming the recommended route (S304). More specifically, this is done as follows. First, one link is successively extracted from the link string indicating the recommended route. Next, with the POI-link relating table 1026, the POI ID related to the link ID of the extracted link is determined as a POI p1. Next, in the POI-link relating table 1026 it is checked whether the POI ID of the POI p1 is related with a link ID other than the link ID of the extracted link. If it is related with the link ID, the road table 1021 is searched for a record 10211 of the road having the link ID other than the link ID of the above-mentioned extracted link to determine the road identified by the record 10211 of the searched road as the road r2. This process is done for all links forming the recommended route.

Next, the outline road map generation process part 105 extracts a background H1 belonging to a predetermined background category belonging to the cutout region R2 from the background table 1024 (S305). More specifically, the record 10241 in which each of coordinate values forming the coordinate value string belongs to the cutout region R2, and which has a background category ID for the predetermined background ID (for example, background category usable for a mark for guiding a route such as a water area, a railway, and a park) is searched. The background identified by the record 10241 of the searched background is defined as the background H1.

Finally, the outline road map generating process part 105 generates the outline road map data of the cutout region R2 including the recommended route, the roads r1 and r2, the POI p1, and the background H1 (S306).

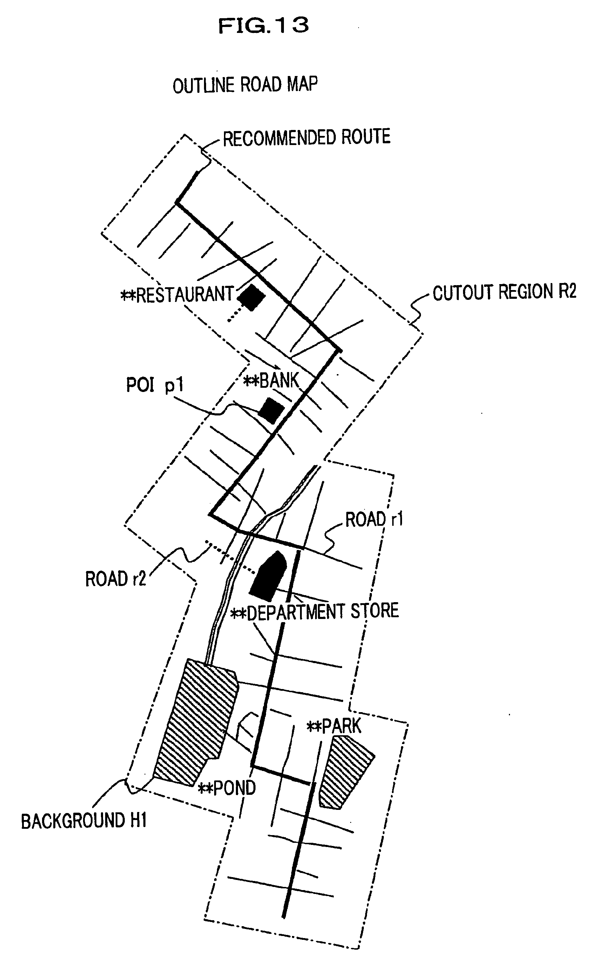

Fig. 13 shows an example of the outline road map indicated by the outline road map data. In Fig. 13, a region surrounded by a dashed line is the cutout region R2; a hatched part is the background H1; a part daubed in black is the POI p1 related with the links forming the recommended route; the roads shown by thick solid lines indicate the recommended route; the roads shown by thin solid lines indicate roads r1 intersecting the recommended route, and a road shown with a dotted line is the road r2 related with the POI p1. As shown in the drawing, the visibility is improved by omitting information having no direct relation in the route guidance with the guiding route (recommended route).

Now returning to Fig. 11, the description will be continued.

The shape-simplified road map generating part 106, when the outline road map generating part 105 generates the outline road map data, generates the shape-simplified road map data on the basis of the outline road map data (S4).

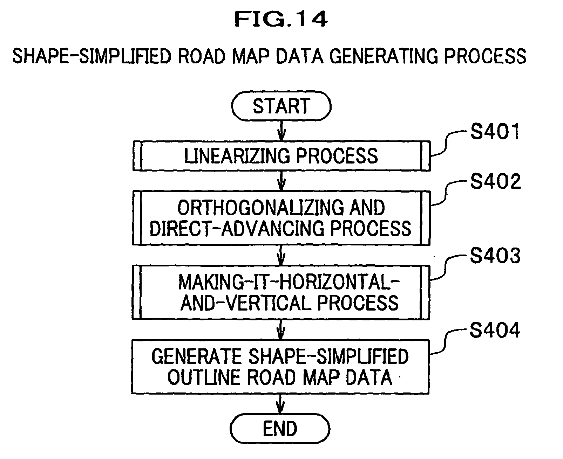

Fig. 14 is a flowchart for illustrating a process of generating the shape-simplified road map data shown in S4 of Fig. 11.

First, the shape-simplified road map generating part 106 performs a linearizing process (S401) for possible linearization for each of the links forming the recommended route shown by the outline road map data by thinning small inflection points in zigzags showing road shapes. Next, an orthogonalizing and direct-advancing process is performed for modification such that the road shapes of the roads intersecting the recommended route is made as orthogonal to the recommended route as possible, and the recommended route advances as straightly as possible (S402). Next, a making-it-horizontal-and-vertical process for modifying map forming elements of the outline road map data such that the road shape of the recommended route is as horizontal and/or vertical as possible with respect to a display screen of the navigation terminal 2 (S403). The shape-simplified road map generating part 106 determines as the shape-simplified road map data the outline road map data in which the map forming elements are deformed such that, as mentioned above, the road shape of the recommended route is linearized, and the shapes of the roads intersecting the recommended route are orthogonalized to the recommended route, the road shape of the recommended road is made have straight advancing or right-angled, and the road shape of the recommended route is made horizontal and/ or vertical (S404).

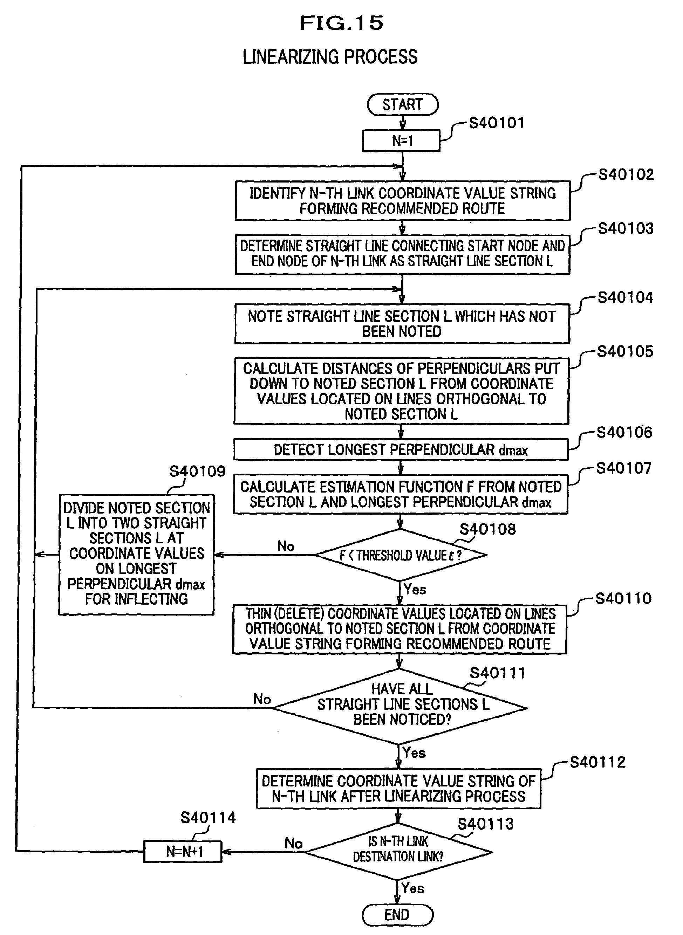

Fig. 15 is a flowchart for illustrating the linearizing process in S401 shown in Fig. 14

First, the shape-simplified road map generating part 106 sets N =1 (S40101) and then identifies a coordinate value string of the N-th link forming the recommended route searched by the route searching part 104 (S40102). More specifically, out of the coordinate value strings of the recommended route identified by the process in S301 in Fig. 12 the coordinate values associated with the link ID of the Nth-link is extracted, the extracted coordinate values are arranged in a connecting order indicated by the coordinate value ID thereof. Next, the shape-simplified road map generating part 106 determines a straight line connecting starting point (start node) coordinate values and end point (end node) coordinate values of the Nth-link as a straight line section L (S40103).

Next, the shape-simplified road map generating part 106 notes the straight line section L which has not become an object of a process in S40105 to S40111 mentioned later and determines it as a noted section L (S40104) and then, calculates lengths of perpendiculars put down to the noted section L from the coordinate values located on lines orthogonal to the noted section L out of the coordinate values forming the coordinate value string of the Nth-link (S40105). Next, on the basis of the calculation result, the longest perpendicular dmax is detected from the perpendiculars (S40106).

Next, the shape-simplified road map generating part 106 calculates an estimation function F of the coordinate values located on the longest perpendicular dmax on the basis of the length of the noted section L and the longest perpendicular dmax (S40107). In the embodiment, the estimation function F is a value obtained by adding a value of q1 × (dmax ÷ L) and a value of q2 × dmax, the value of q1 × (dmax ÷ L) being obtained by multiplying a ratio between the lengths of the perpendicular dmax and the noted section L by a predetermined coefficient q1, the value of q2 × dmax being obtained by multiplexing the length of the perpendicular dmax by a predetermined coefficient q2.

Next, the shape-simplified road map generating part 106 judges whether the estimation function F is smaller than a predetermined threshold ε (S40108). If the estimation function F is equal to or greater than the predetermined threshold ε (No, in S40108), the shape-simplified road map generating part 106 judges that the coordinate values located on the longest perpendicular dmax is remote from the noted section L to such an extent that the coordinate values cannot be thinned from the coordinate value string of the Nth- link. Next, the noted section L is divided into two straight line sections L, namely, a straight section L connecting the start coordinate values of the noted section L to the coordinate values located on the longest perpendicular dmax (referred to as inflection point coordinate values) and a straight line section L connecting the inflection point coordinate values with the end point coordinate values of the noted section L (S40109). Next, processing returns to S40104.

On the other hand, when the estimation function F is smaller than the predetermined threshold value ε (Yes, in S40108), the shape-simplified road map generating part 106 judges that the coordinate values located on the perpendiculars orthogonal to the noted section L are slightly remote from the noted section L, so that they can be thinned from the coordinate value string of the Nth-link, and thus thins respective coordinate values located on the lines orthogonal to the noted section L from the coordinate value string of the Nth- link, i.e., delete them (S40110). Next, the shape-simplified road map generating part 106 judges whether all straight line sections L are noted (S400111); proceeds to S40112, if all the straight line sections L have been noted; and on the other hand, returns to S40104, if all the straight line sections L have not been noted.

In S40112, the shape-simplified road map generating part 106 determines the finally left coordinate values without deletion as the result of the above-mentioned process from S40104 to S40111 (start node coordinate values, end node coordinate values, inflection point coordinate values) as respective values forming the coordinate value string of the Nth-link after the linearizing process. Next, because if the Nth-link is a destination link (a last link of the recommended route (Yes, in S40113), the linearizing process for all links forming the recommended route is finished, this flow is finished. On the other hand, if the Nth-link is not the destination link (No, in S40114), N is incremented by one (N = N + 1) (S40114), the processing returns to S40102.

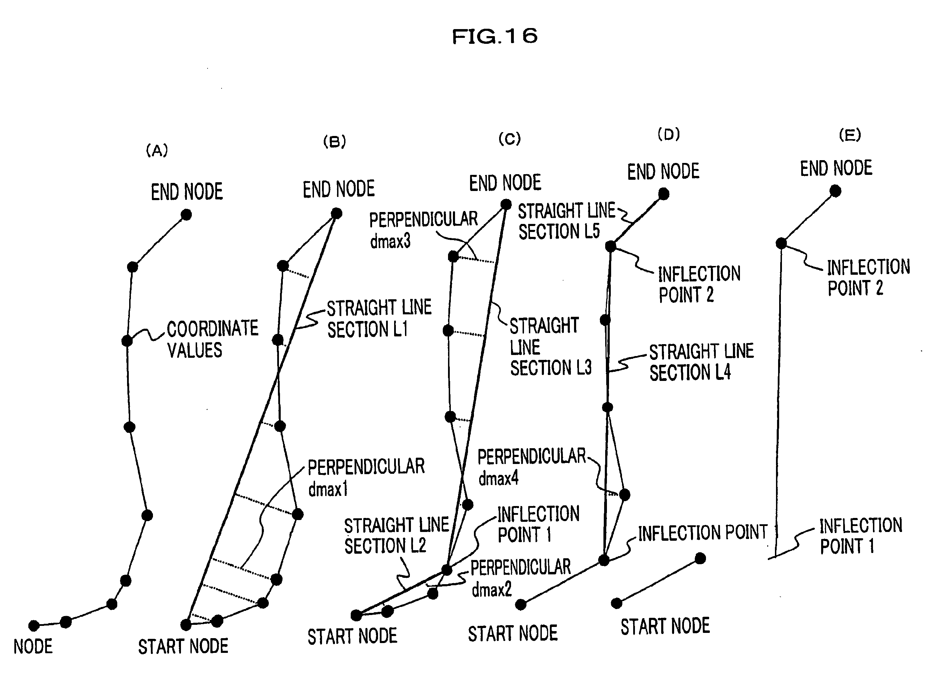

Fig. 16 is a drawing showing a linearizing process. First, as shown in Fig. 16 (A), the coordinate value string of the Nth-link of the recommended route is identified by S40102. Next, as shown in Fig. 16 (B), a straight line section L1 connecting the start node to the end node of the Nth-link is set by S40103 in Fig. 15, and in addition, lengths of perpendiculars made toward the noted section L1 from respective coordinate values located on the perpendiculars of the straight line section L1 are calculated by S40104 to S40106 in Fig. 15. Among them, is identified the perpendicular dmax1 having the longest length.

Next, for coordinate values on the perpendicular dmax1, S40107 and S40108 in Fig. 15 are executed. Here, because the estimation value F is equal to or greater than the threshold ε for the coordinate values on the perpendicular dmax1, the straight line section L1 is divided into a straight line section L2 connecting the start node and the coordinate value (inflection point 1) on the perpendicular dmax1 and a straight line section L3 connecting the inflection point 1 and the end node.

Next, for each of the straight sections L2 and L3 S40104 to S40106 in Fig. 15 are executed to identify the perpendicular dmax2 having the longest length out of the perpendiculars extending to the straight line section L2 from the respective coordinate values located on the lines orthogonal to the straight line section L2 as well as a perpendicular having the longest length out of the perpendiculars extending to the straight line section L3 from the respective coordinate values located on the lines perpendicular to the straight line section L3.

Next, for respective coordinate values on the perpendiculars dmax2 and dmax3 S40107 and S40108 in Fig. 15 are executed. Here, because the estimation value F for the coordinate values on the perpendicular dmax2 are smaller than the threshold ε, S40110 in Fig. 16 is executed and as shown in Fig. 16 (D), respective coordinate values located on the perpendiculars of the straight line section L2 (except the start node and the inflection point 1) are thinned. On the other hand, because the estimation value F for the coordinate values on the perpendicular dmax3 is equal to or greater than the threshold ε, S40109 in Fig. 16 is executed and as shown in Fig. 16 (D), the straight line section L3 is divided into two sections, namely, a straight line section L4 connecting the inflection point 1 to the coordinate values (inflection point 2) on the perpendicular dmax3 and a straight line section L5 connecting the inflection point 2 to the end node.

Next, for the straight line section L4 S40104 to S40106 in Fig. 15 are executed to identify a perpendicular dmax 4 having the longest length out of perpendiculars extending from the respective coordinate values located on the lines perpendicular to the straight line L4. On the other hand, with the straight line section L5 there is no coordinate values located on the lines perpendicular to the straight line section L5. Thus, S40105 to S40110 in Fig. 15 are not executed.

Next, for the coordinate values on the perpendicular dmax4, S40107 and S40108 in Fig. 15 are executed. Here, because the estimation value F for the coordinate values on the perpendicular dmax4 is smaller than the threshold ε, S40110 in Fig. 16 is executed, and as shown in Fig. 16 (E), respective coordinate values located on the lines orthogonal to the straight line section L4 are thinned (except the inflection point 1 and the inflection point 2). This provides the coordinate value string of the Nth-link subject to the linearizing process as shown in Fig. 16 (E).

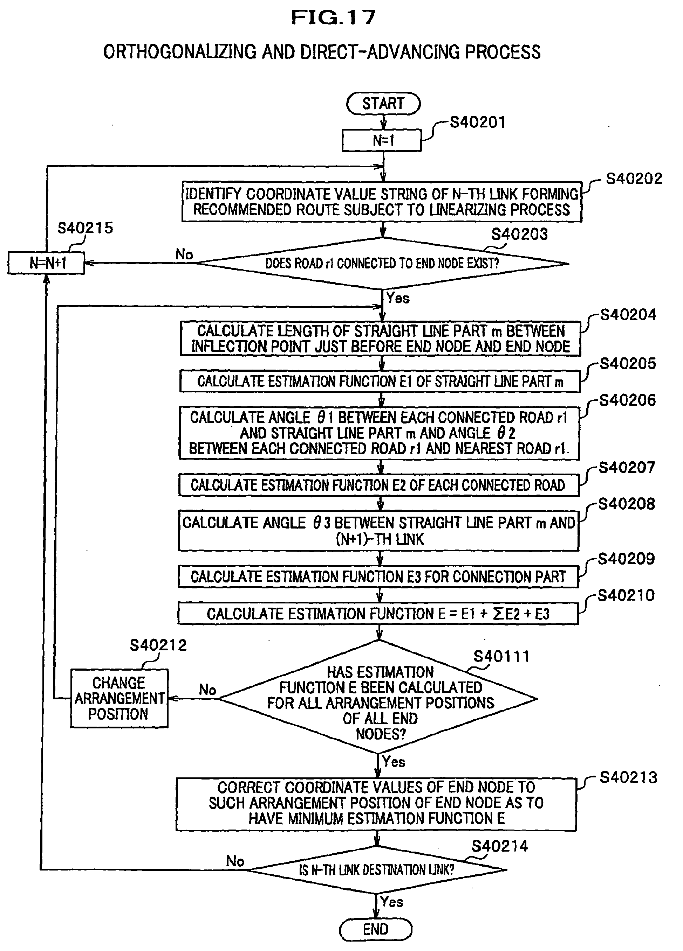

Fig. 17 is a flowchart for illustrating the orthogonalizing and direct-advancing process in S402 shown in Fig. 14.

First, the shape-simplified road map generating part 106 sets N = 1 (S40201), and then identifies the coordinate value string of the N-th link forming the recommended route subject to the linearizing process according to the flow shown in Fig. 15 (S40202). More specifically, out of the coordinate value strings of the recommended route subject to the linearizing process, the coordinate values corresponding to the link ID of the N-th link are extracted, and each of the extracted coordinate values is arranged in the connection order indicated by the coordinate value ID to identify the coordinate value string of the Nth-link. It is checked whether the road r1 connected to the end node of the Nth-link (the road r1 having the same coordinate values as the coordinate values of the end node) exists with reference to the outline road map data generated by the outline road map generating part 105 (S40203). If it does not exist (No, in S40203), N is incremented by one (N = N + 1) (S40215), and the processing returns to S40202.

On the other hand, if the road r1 connected to the end node of the Nth-link exists (Yes, in S40203), the shape-simplified road map generating part 106 calculates a length of a straight line part m between the inflection point just before the end node of the N-th link and the end node of the N-th link (S40204). Next, an estimation function E1 for the straight line part m is calculated (S40205). Here, the smaller the value of the estimation function E1 is the smaller a difference from the initial value of its length (the length of the straight line part m before an arrangement position change of the end node) is (E1 = |α (mo -m)|, m₀ being the initial length of the straight line part m and α being a coefficient equal to or greater than one). In addition, it is assumed that the smaller the value of the estimation function E1 is the higher the estimation becomes.

Next, for each of roads r1 connected to the end node of the N-th link the shape-simplified road map generating part 106 calculates an angle θ1 between the road r1 and the straight line part m and an angle 02 between the road r1 and another road r1 adjacent to the road r1 (S40206), and then, calculates an estimation function E2 for each of these roads r1 (S40207). Here, the smaller a value of the estimation function E2 is the closer to 90 degrees the angle θ1 is and the smaller the value the closer to 180 degrees the angle θ2 made with another adjacent road r1 is (E2 = |β1 (90° - θ1)| + |β2 (180° - θ2)|, β1 and β2 being coefficients equal to of more than one). Further, it is assumed that the smaller the value of the estimation function E2 is the higher the estimation becomes.

Next, the shape-simplified road map generating part 106 calculates an angle θ3 made between the straight line part m and the (N+1)-th link (S40208), and then, calculates an estimation function E3 for a connection part of the N-th link with the (N+1)-th link (S40209). Here, the closer to 180 degrees or 90 degrees the angle θ3 is the smaller a value of the estimation function E3 is (E3 = min (|γ (180° - θ3)|, |γ(90°-θ3)|, γ being a coefficient equal to or greater than one, min (A, B) meaning that the smaller value is adopted between A and B). Further, it is assumed that the smaller the estimation function F3 is the higher the estimation is.

When calculating the estimation function E1 for the straight line part m, the estimation function E2 for each of the roads r1 connected to the end node of the N-th link, and the estimation function E3 for the connection part of the N-th link with the link (N + 1)-th link as mentioned above, the shape-simplified road map generating part 106 calculates the estimation function E consisting of the total of them E = E1 + ΣE2 + E3, and registers this to have correspondence to the coordinate values of the end node (S40210).

Next, the shape-simplified road map generating part 106 checks whether the above-mentioned estimation function E has been calculated for all arrangement positions within a predetermined area determined on the basis of initial coordinate values of the end node (the coordinate values before the arrangement position change of the end node) (for example, coordinate values located within a predetermined radius from the initial coordinates values) (S40211). If it is not calculated (No, in S40211), the coordinate values of the end node are changed to an arrangement position for which the estimation function E is not calculated (S40212), and the processing returns to S40204. On the other hand, if it is calculated, (Yes, in S40211), the processing proceeds to S40213.

In S40213, the shape-simplified road map generating part 106 selects one of the estimation functions E which is the smallest from the estimation functions E associated with respective arrangement positions within the above-mentioned range. Next, the coordinate values of the end node of the N-th link are corrected to the arrangement position associated with the selected estimation function E. Thus, the arrangement position of the end node of the N-th link is corrected so that the length of the straight line part m of the N-th link is maintained as closer to its initial value as possible; so that the straight line part m intersects each of the roads connected to the end node of the N-th link as orthogonally as possible; and so that the straight line part m is arranged as straightly or perpendicularly to the connection part to the (N+1)-th link as possible.

Here, if the N-th link is the destination link (the last link of the recommended route) (Yes, in S40214), the shape-simplified road map generating part 106 finishes this flow because the orthogonalizing and direct-advancing process has been finished for all links forming the recommended route. On the other hand, if the N-th link is not the destination link (No, in S40214), the shape-simplified road map generating part 106 increments N by one (N = N+1) (S40215), and then returns to S40202.

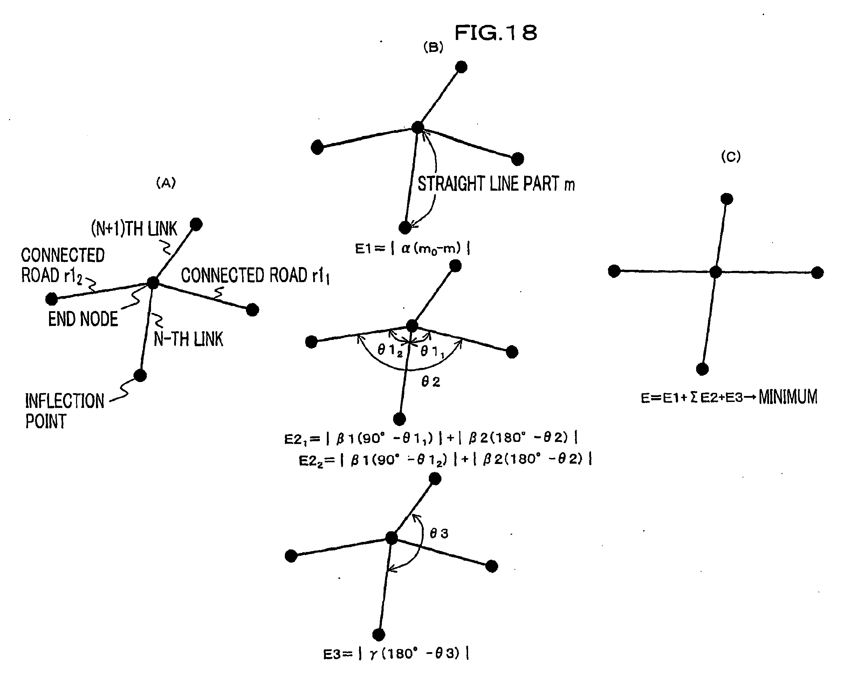

Fig. 18 is a drawing for illustrating the orthogonalizing and direct-advancing process. As shown in Fig. 18 (A), it is assumed that the end node of the N-th link is connected to the (N+1)-th link and connected to two roads r1₁ and r1₂. In this case, as shown in Fig. 18(B), the estimation function E1 is calculated in accordance with the straight line part m between the end node of the N-th link and the inflection point just before the end node; estimation functions E2₁ and E2₂ are calculated in accordance with the angle θ1₁ and θ1₂ which are angles of the straight part with the two roads r1₁ and r1₂, respectively; and an estimation function E3 is calculated in accordance with the angle θ3 made between the straight part m and the N-th link. The end node coordinate values of the N-th link are changed so as to have a minimum value of the total value E of these estimation functions by the flow shown in Fig. 17. As a result, as shown in Fig. 18 (C), an arrangement position of the end node of the N-th link is changed so that a length of the straight part m of the N-th link is kept as close to the initial value mo as possible, the straight link part m intersects the roads r1₁ and r1₂ as orthogonally as possible, and the connection part between the straight line part m and the (N+1)-th link is as direct and/or near a right angle as possible.

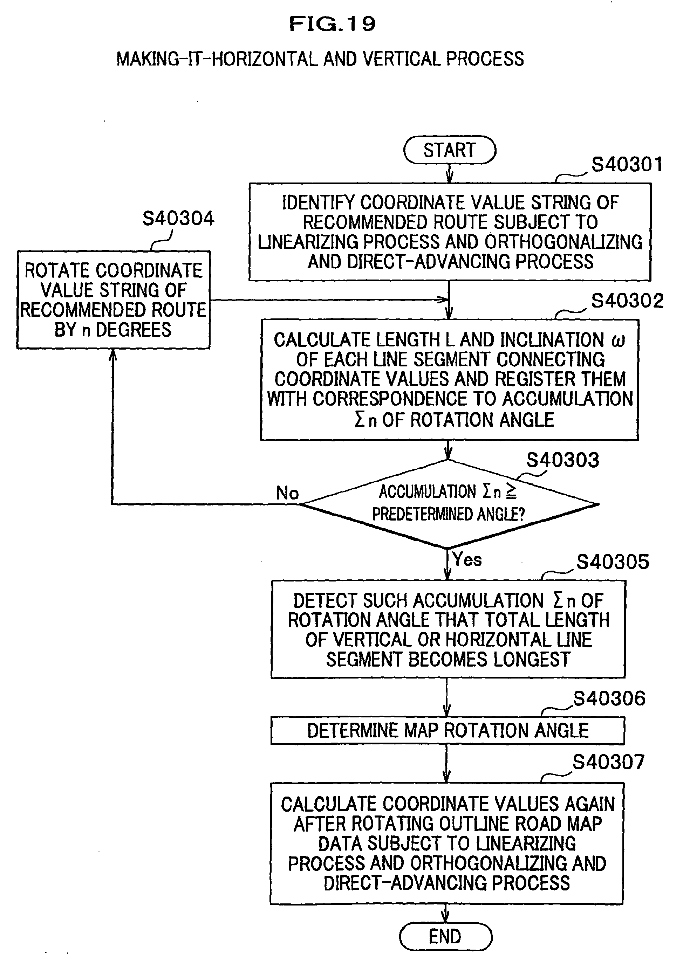

Fig. 19 is a flowchart for illustrating the making-it-horizontal-and-vertical process in S403 shown in Fig. 14.

The shape-simplified road map generating part 106 identifies the coordinate value string of the recommended route subject to the linearizing process by the flow shown in Fig. 15 and the orthogonalizing and direct-advancing process by the flow shown in Fig. 17 (S40301). Next, for each of the line segments connecting adjacent coordinate values of the recommended route a length I of the line segment and an inclination ω to a coordinate axis (X axis or Y axis) are calculated, and these are registered to have correspondence to a rotation angle from the initial condition of the coordinate value string of the recommended route, i.e., a total rotation angle En by a rotating process in S4034 mentioned later (S40302).

Next, the shape-simplified road map generating part 106 checks whether or not the total rotation angle Σn reaches a predetermined angle (for example, 90°) (S40303). If it does not reach the predetermined angle (No, in S40303), the coordinate value string of the recommended route is rotated by n degrees (for example, 10 degrees) with respect to the departure place of the recommended route (S40304). On the other hand, if it reaches the predetermined angle (Yes, in S40303), such a total rotation angle Σn that a total length of vertical or horizontal line segment becomes longest is detected from the total rotation angle Σn (S40305).

More specifically, for each total rotation angle Σn registered in S40302 an estimation value G3 (= G1 + G3) of each line segment is calculated using an estimation value G1 having a value becoming greater as the inclination ω becomes smaller and an estimation value G2 becoming greater as the length 1 of the line segment becomes longer. Next, a total ΣG3 of its estimation value is regarded as an estimation value G4 of the total rotation angle and a total rotation angle Σn having the highest estimation value G4 is detected.

Next, the shape-simplified road map generating part 106 determines the total rotation angle Σn detected as mentioned above as a map rotation angle (S40306). Next, the linearizing process is performed by the flowchart shown in Fig. 15 and further each map forming objects of the outline road map data including the coordinate value string of the recommended route subject to the orthogonalizing and direct-advancing process by the flow shown in Fig. 17 are rotated by the map rotation angle with respect to the departure place of the recommended route to update the coordinate value of each map forming object (S40307).

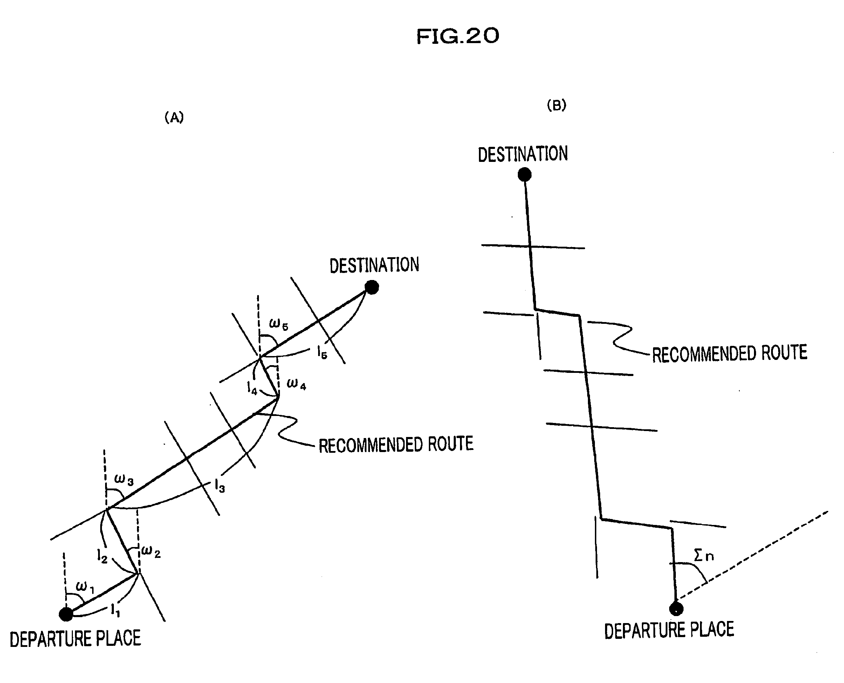

Fig. 20 is a drawing showing the making-it-horizontal-and-vertical process. If the recommended route has a shape as shown in Fig. 20 (A), the length 1 and the inclination ω of each line segment forming the recommended route are calculated by the flow shown in Fig. 19 with respect to the departure place of the recommended route whenever rotation by n degrees is performed. Next, the rotation angle Σn having the longest total perpendicular line segments is selected, and as shown in Fig. 20 (B), the outline road map data is rotated by the selected rotation angle Σn with respect to the departure place of the recommended road to update the coordinate values of each of the map forming object.

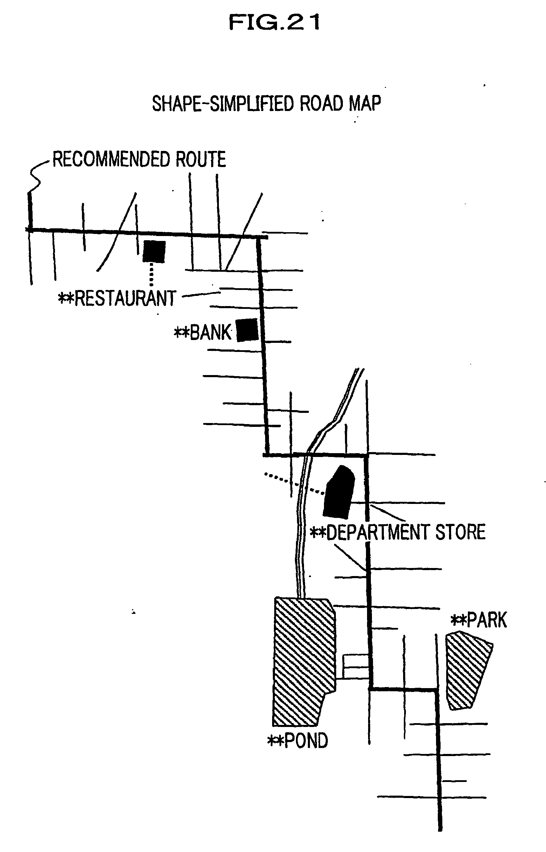

Fig. 21 shows an example of the shape-simplified road map indicated by the shape-simplified road map data generated on the basis of the outline road map data shown in Fig. 13. As shown in the drawing, the recommended route is made to be linearized possibly by omitting arrangement points and curved parts are right-angled possibly. Further, the line segments forming the recommended route are made as vertical or horizontal as possible. In addition, almost of all roads intersecting the recommended route are made orthogonal. This can improve the visibility of the guiding route because even though the original recommended route has a complicated road shape, it is displayed on the navigation terminal 2 with simplification.

Now returning to Fig. 11, the description will be continued.

Next, the notice part detecting part 107 and the notice information generating part 108 generate the route guidance information on the basis of the outline road map data generated by the outline road map generating part 105 and the shape-simplified road map data generated by the shape-simplified road map generating part 106 (S5).

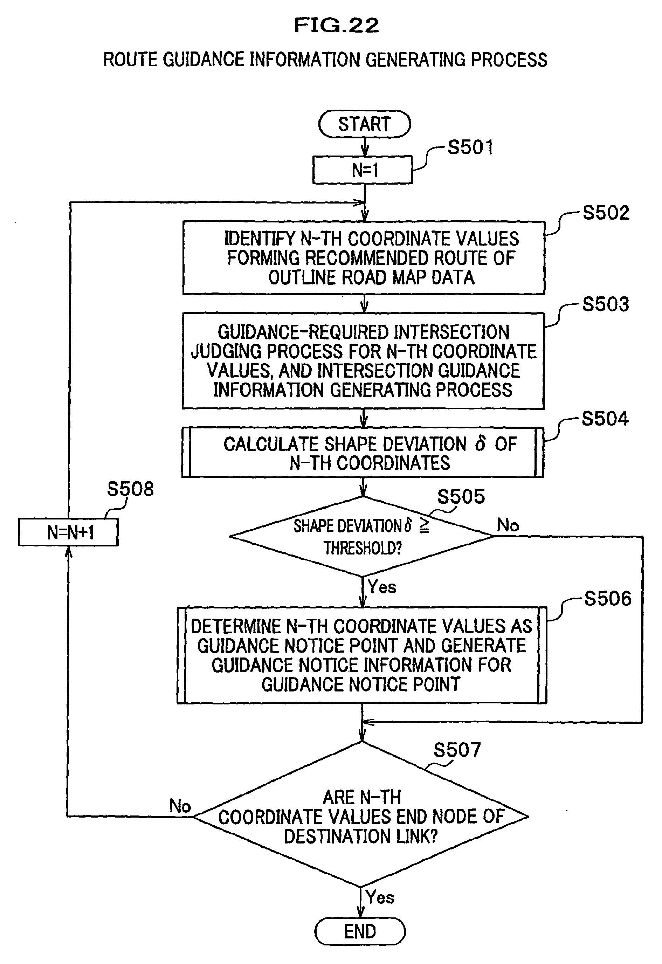

Fig. 22 is a flowchart for illustrating the route guidance information generating process shown in S5 in Fig. 11.

First, the notice information generating part 108 sets N = 1 (S501) and notes N-th coordinate values from the coordinate value strings of the recommended route identified in S301 of Fig. 12 (S502).

Next, the notice information generating part 108 performs a guidance-required intersection judging process, and generates intersection guidance information, if it is a guidance-required intersection (S503). More specifically, node coordinates of each of the links forming the recommended route are obtained from the link table 1023 to judge whether the Nth-coordinate values are an end node of any of the links forming the recommended route. If they are the end node, the notice information generating part 108 checks the connection link ID registered in the field 10236 of the record 10231 of this link and further checks whether or not this link is connected to any link other than the links forming the recommended route. If it is connected to any link other than the links forming the recommended route, the N-th coordinate values are determined as the guidance-required intersection. Next, using the information of the link, having the Nth-coordinate values as a start node and forming the recommended route, intersection guidance information indicating a guiding direction is generated, such as "go straight at the intersection", "turn left at the intersection", and "turn right at the intersection" to have correspondence to the N-th coordinate values.

Next, the notice part detecting part 107 calculates for the Nth-coordinates a shape deviation δ of the outline road map data and the shape-simplified road map data (S504) to check whether or not the shape deviation δ is equal to or greater than a threshold (S505). If it is equal to or greater than the threshold, the N-th coordinate values are determined as the guidance notice part having a great difference between the outline road map and the shape-simplified road map and thus having a possibility of mistaking the guidance direction. In response to this, the notice information generating part 108 generates the guidance notice information for the N-th coordinate values determined as the guidance notice point (S506).

Next, if the N-th coordinate values correspond to the end node of the destination link (the last link of the recommended route) (Yes, in S507), the notice information generating part 108 finishes this flow because the guidance notice information generating process has been finished for all coordinate values forming the recommended route. On the other hand, if the N-th coordinate values do not correspond to the end node of the destination link (No, in S507), N is incremented by one (N = N + 1) (S508), the processing returns to S502.

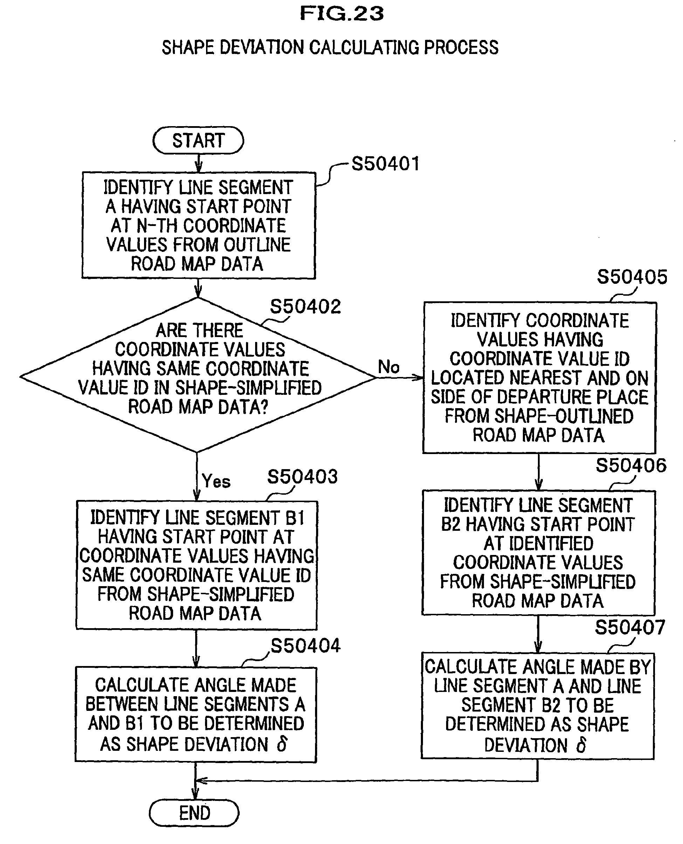

Fig. 23 is a flowchart for illustrating the shape-deviation calculating process in S504 of Fig. 22.

First, the notice part detecting part 107 identifies a line segment A connecting N-th coordinate values to the (N+1)-th coordinate values from the coordinate value string of the recommended route identified in S301 of Fig. 12 (S50401).

Next, the notice part detecting part 107 checks whether or not coordinate values having a coordinate value ID which is the same as a coordinate value ID of the N-th coordinate values are included in the coordinate value string of the recommended route in the shape-simplified road map data (the coordinate value string subject to the linearizing process, the right-angling and direct-advancing process, and the making-it-horizontal-and-vertical process by the process shown in Fig. 14) (S50402).

Next, if they are included (Yes, in S50402), the notice part detecting part 107 identifies a line segment B1 connecting the coordinate values having the same coordinate value ID to the coordinate values located after the coordinate values by one from the coordinate value string of the recommended route in the shape-simplified road map data (S50403). Next, an angle made between the line segment A and the line segment B is calculated to be set as the shape deviation δ for the N-th coordinate values (S50404).

On the other hand, if they are not included (No, in S50402), the notice part detecting part 107 identifies coordinate values having a connection order prior to the same coordinate value ID and indicating a nearest connection order from the coordinate value string of the recommended route in the shape-simplified road map data (S50405). Next, a line segment B2 connecting the identified coordinate values to the coordinate values located after the coordinate values by one are identified from the coordinate value string of the recommended route in the shape-simplified road map data (S50406). Next, an angle made by the line segment A and the line segment B2 is calculated to be set as the shape deviation δ for the N-th coordinate values (S50407).

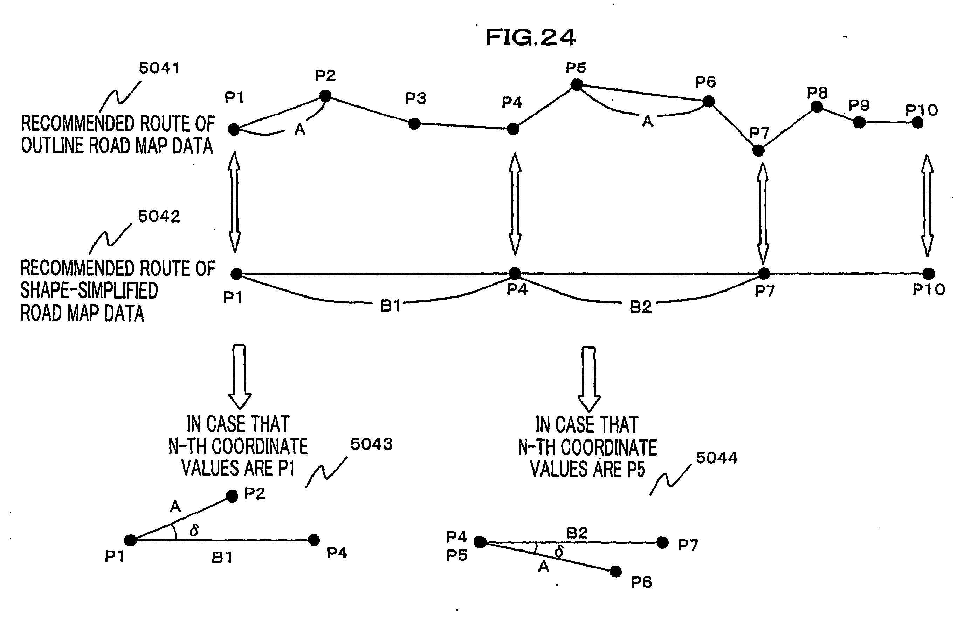

Fig. 24 is a drawing showing the shape deviation calculating process. Here, a reference 5041 indicates the coordinate value string of the recommended route in the outline road map data and is formed with coordinate values of P1 to P10. Further, a reference 5042 shows the coordinate value string of the recommended route in the shape-simplified road map data including coordinate values of P1, P4, P7, and P10.

In the flow shown in Fig. 23, if the coordinate values P1 are the N-th coordinate values, the coordinate values P1 are also included in the coordinate value string of the recommended route 5042. Thus, the S50403 and S50404 in Fig. 23 are executed, so that the angle made between the line segment A connecting the coordinate value P1 to the coordinate value P2 on the recommended route 5041 and the line segment B1 connecting the coordinate value P1 and the coordinate value P4 on the recommended route 5042 is calculated as the shape deviation δ for the coordinate value P1. If the coordinate values P5 are the N-th coordinate values, the coordinate values P5 are not included in the coordinate value string of the recommended route 5042. Therefore, the coordinate values P4 are identified from the recommended route 5042 by S50405. An angle made by the line segment A connecting the coordinate values P5 to the coordinate values P6 on the recommended route 5041 and the line segment B2 connecting the coordinate values P4 to the coordinate values P7 on the recommended route 5042 is calculated as the shape deviation δ for the coordinate values P5.

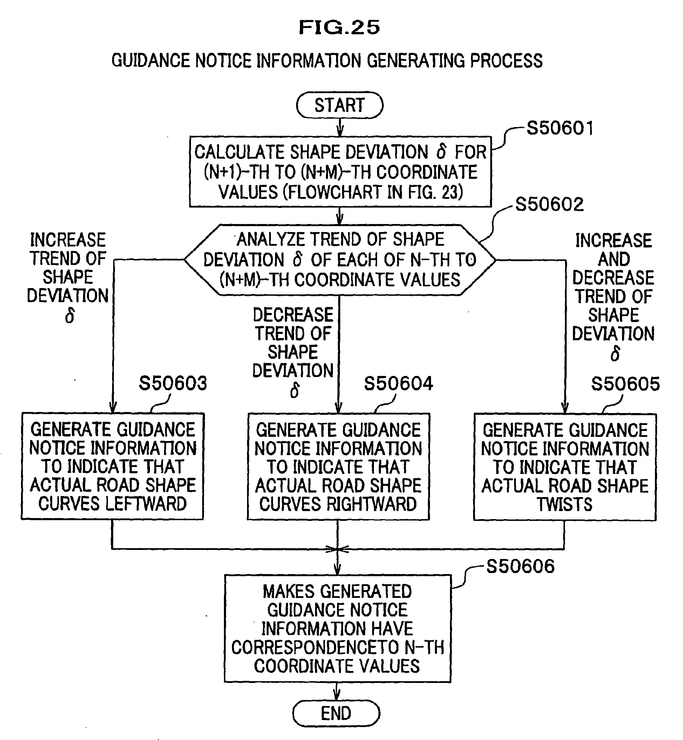

Fig. 25 is a flowchart for illustrating the guidance notice information generating process shown in S506 of Fig. 22.

First, the notice part detecting part 107 calculates the shape deviation δ for each of the (N+1)-th to (N+M)-th coordinate values by executing the shape deviation calculating process shown in Fig. 23 for M (M being a predetermined number, for example, 5) sets of coordinate values following the N-th coordinate values of the coordinate value string of the recommended route identified by the S301 in Fig. 12 (S50601). Next, the shape deviation δ of each of (N+1)-th to (N+M)-th coordinate values is transferred to the notice information generation part 108 together with the shape deviation δ of the N-th coordinate values.

In response to this, the notice information generation part 108 analyzes a trend of the shape deviation δ for each of the N-th to (N+M)-th coordinate values (S50602). Next, the guidance notice information is generated in accordance with the analyzing result (S50603 to S50605).

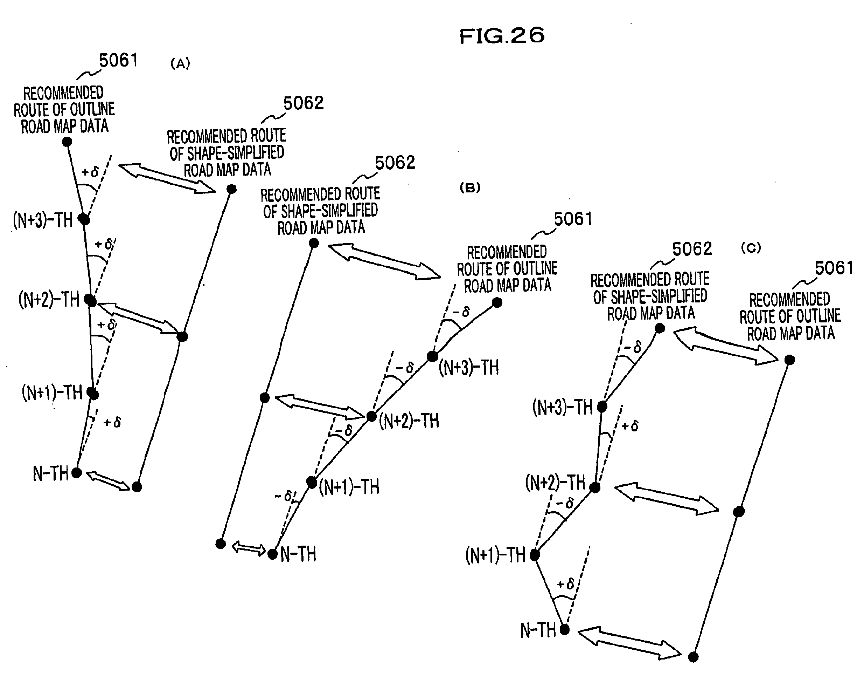

Fig. 26 is a drawing indicating the guidance notice information generation process. Here, a reference 5061 indicates the coordinate value string (from N-th to (N+3)-th coordinate value string) of the recommended route in the outline road map data. A reference 5062 indicates the coordinate value string of the recommended route of the shape-simplified road map data corresponding to the coordinate value string 5061. For example, as shown in Fig. 26 (A), when each of the N-th to (N+3)-th shape deviations δ trends toward increase, the road shape indicated by the outline road map data is different from the road shape indicated by the shape-simplified road map data and curves leftward. Then, in this case, the guidance notice information is generated to indicate that the actual road shape curves leftward (S50603). In addition, as shown in Fig. 26 (B), when each of the N-th to (N+3)-th shape deviations δ trends toward decrease, the road shape indicated by the outline road map data is different from the road shape indicated by the shape-simplified road map data and curves rightward. Then, in this case, the guidance notice information is generated to indicate that an actual road shape curves rightward (S50604). Further, when each of the N-th to (N+3)-th shape deviations δ increases or decreases, the road shape indicated by the outline road map data is different from the road shape indicated by the shape-simplified road map data and twists. Then, in this case, the guidance notice information is generated to indicate that the actual road shape twists (S50605).

After that, the notice information generating part 108 makes the generated guidance notice information have correspondence to the N-th coordinate values (S50606).

Now returning to Fig. 11, the description will be continued.

The delivery information generating part 109 generates delivery information including the outline road map data, the shape-simplified road map data, the guidance-required intersection information, and the guidance notice information, generated as mentioned above and transmits it to the navigation terminal 2 that transmitted the route guiding request through the communicating part 110 (S6).

Next will be described the navigation terminal 2.

The navigation terminal 2 transmits the route guiding request to the navigation server 1 in response to an instruction from the user and then executes the route guiding process in accordance with the delivery information obtained from the navigation server 1. As shown in Fig. 1, the navigation terminal 2 includes a current place detecting part 201 for detecting a current place of the navigation terminal 1 using a GPS (Global Positioning System), a vehicle speed sensor, an azimuth sensor, and the like, an input part 202 for receiving the instruction from the user, a display part 203 for displaying various types of information including maps, a route guiding part 204, a delivery information storing part 205 for storing the delivery information received from the navigation server 1, and a communicating part 206 for communicating with the navigation server 1 through the base station 4 and the network 3.

The route guiding part 204 transmits the route guiding request including an indication of the departure place and the destination in accordance with the instruction received from the user through the input part 202 to the navigation server 1 through the communicating part 206 and then performs the route guidance to the destination in accordance with the delivery information obtained from the navigation server 1.

The navigation terminal 2 mentioned above is provided by executing a program stored in an external storage device in a computer including: a CPU; a memory, the external storage device such as a HDD; a mobile communicating device for communicating with the network 3 through the base station 4; an input device such as an operation panel and a touch panel; a display device such as an LCD; and an I/O (Input/Output) for communicating with the GPS (Global Positioning System), the vehicle speed sensor, the azimuth sensor and the like. In this case, the memory and/or the external storage device are used as the delivery information storing part 205, and the mobile communication device is used as the communicating part 206.

Next will be described an operation of the navigation terminal 2.

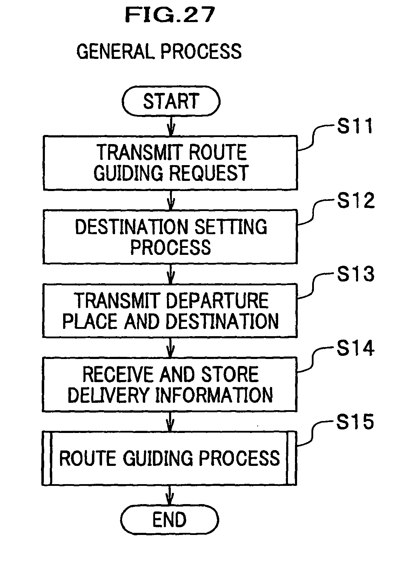

Fig. 27 is a flowchart for illustrating the operation of the navigation terminal 2. The flow is started when the route guiding part 204 receives a start instruction of the route guidance from the user through the input part 202.

First, the route guiding part 204 transmits a route searching request to the navigation server 1 through the communicating part 206 (S11) and then receives input screen image data for a destination search condition from the navigation server 11 to display it on the display part 203. The route guiding part 204 transmits the destination search condition received from the user through the input part 202 to the navigation server 1 and receives information of the POI meeting the search condition. Next, the route guiding part 204 displays the information of the POI received from the navigation server 1 on the display part 203 and then receives selection of the destination among the displayed POI (S12).

Next, when receiving the selection of the destination from the user through the input part 202, the route guiding part 204 transmits information of the selected destination and the current place (departing point) detected by the current place detecting part 201 to the navigation server 1 through the communicating part 206 (S13) and waits for the above-mentioned delivery information transmitted from the navigation server 1.

When receiving the delivery information from the navigation server 1, the route guiding part 204 stores it in the delivery information storing part 205 (S14). Next, the route guiding process is started using the delivery information and the current places periodically detected by the current place detecting part 201 (S15).

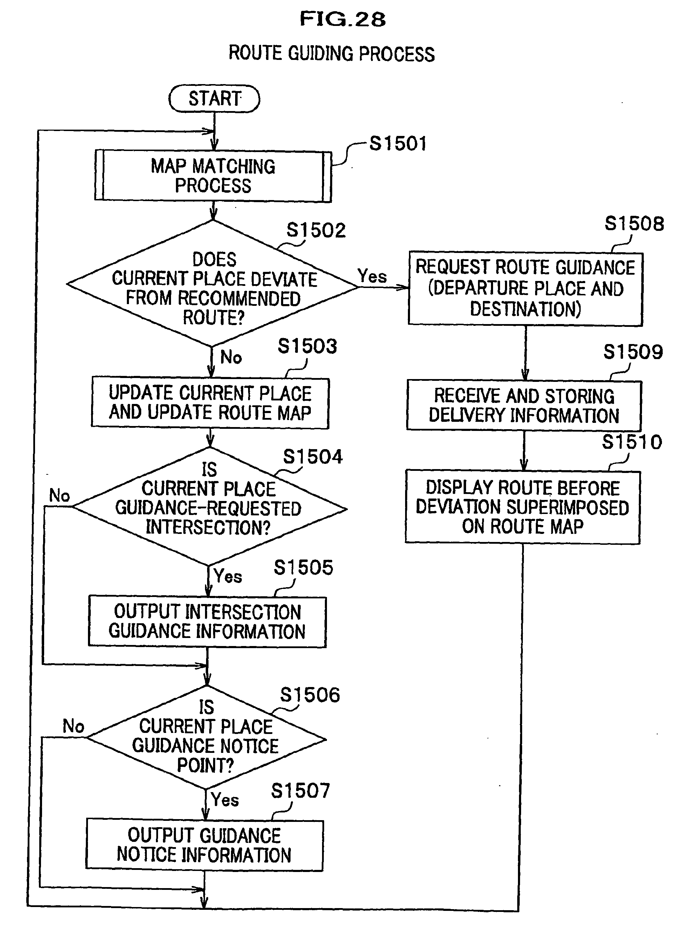

Fig. 28 is a flowchart for illustrating the route guiding process shown in S15 in Fig. 27.

First, the route guiding part 204 executes a map matching process for superimposing the current places periodically detected by the current place detecting part 201 on the recommended route indicated by the outline road map data stored in the delivery information storing part 205 (S1501).

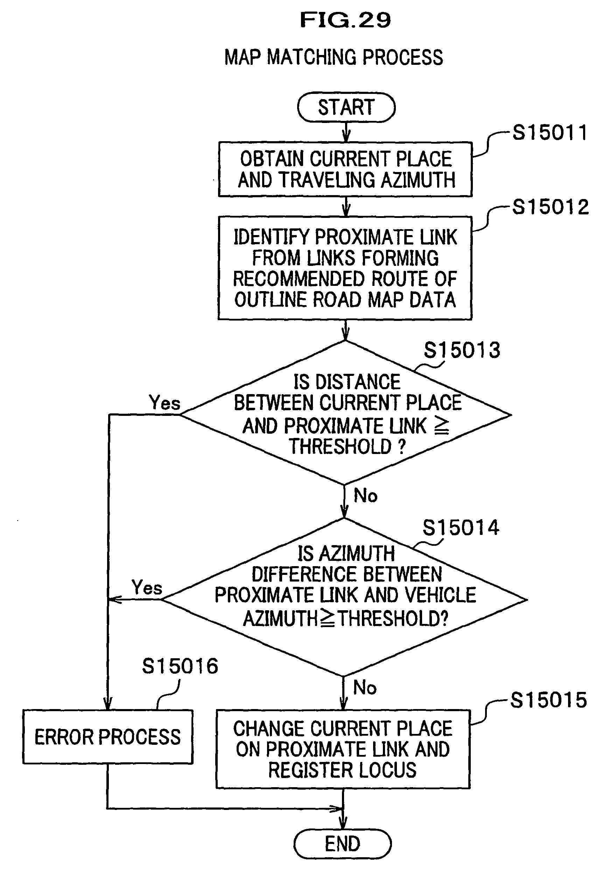

Fig. 29 is a flowchart for illustrating the map matching process shown in S1501 in Fig. 28. First, the route guiding part 204 periodically obtains the latest current place from the current place detecting part 201 and obtains a traveling direction of the navigation terminal 2 (S15011). Here, the traveling direction can be calculated using the azimuth sensor or the like or the traveling direction of the navigation terminal 2 can be calculated using the latest current place obtained from the current place detecting part 201 and the coordinates of the place subject to a locus registration by S15015 mentioned later.

Next, the route guiding part 204 identifies a link closest to the current place (referred to as a proximate link) among the links forming the recommended route indicated by the outline road map data using the outline road map data of the delivery information stored in the delivery information storing part 205 (S15013). As mentioned above, in each of the coordinate values forming the coordinate value string of the recommended route, identification information (coordinate value ID) indicating the connection order on the recommended route is made to have correspondence to the link ID to which the coordinate values belong. Then, more specifically, a link having the link ID having the correspondence to the coordinate values closest to the current place is determined as the proximate link. The coordinate value string formed with the coordinate values having the correspondence to the link ID is determined as the proximate link.

Next, a route guiding part 404 calculates a distance between the proximate link and the current place (a distance of a perpendicular put down from the current place to the proximate link), and checks whether the distance is equal to or greater than a predetermined threshold (first threshold) (S15013). Further, if it is checked whether a difference in azimuth between an azimuth of the proximate link (a line segment closest to the current place in a case that the proximate link is formed with a plurality of line segments) and the traveling azimuth obtained in S15011 is equal to or greater than a predetermined threshold (second threshold) (S15014). Here, the first and second thresholds are set to values suitable for judging whether or not the currant place is on the recommended route.

When the distance between the proximate link and the recurrent place is equal to or greater than the first threshold, or when the difference in the azimuth between the azimuth of the proximate link and the traveling azimuth is equal to or greater than the second threshold, the route guiding part 404 judges that a possibility that the current place position obtained in S15011 is not on the recommended route is high, executing a predetermined error process (S15016), and the flow is finished. On the other hand, when the distance between the proximate link and the current place is smaller than the first threshold and the difference in the azimuth between the proximate link and the traveling azimuth is smaller than the second threshold, it is judged that the possibility that the current place obtained in S15011 is on the recommended route is high to change the current place to the position on the proximate link (for example, a position where the proximate link intersects a perpendicular made from the current place to the proximate link). Further, the current place after the change is subject to the locus registration in the memory or the like (S15015). Then the flow is finished.

Returning to Fig. 28, the description will be continued.

Next, if the error process is executed in the map matching process, the route guiding part 204 judges that the current place deviates from the recommended route (Yes, in S1502), proceeding to S1508. On the other hand, if a process is executed to superimpose the current place on the proximate link in the map matching process, the route guiding part 204 judges that the current place does not deviate from the recommended route (No, in S1502), proceeding to S1503.

In S1503, the route guiding part 204 determines the current place (referred to as a current place for display) indicated by the shape-simplified road map data stored in the delivery information storing part 205 on the basis of the current place subject to map-matching on the recommended route indicated by the outline road map data, and then displays the shape-simplified road map indicated by the shape-simplified road map data adjacent to the current place for display together with a vehicle mark indicating the current place for displaying.

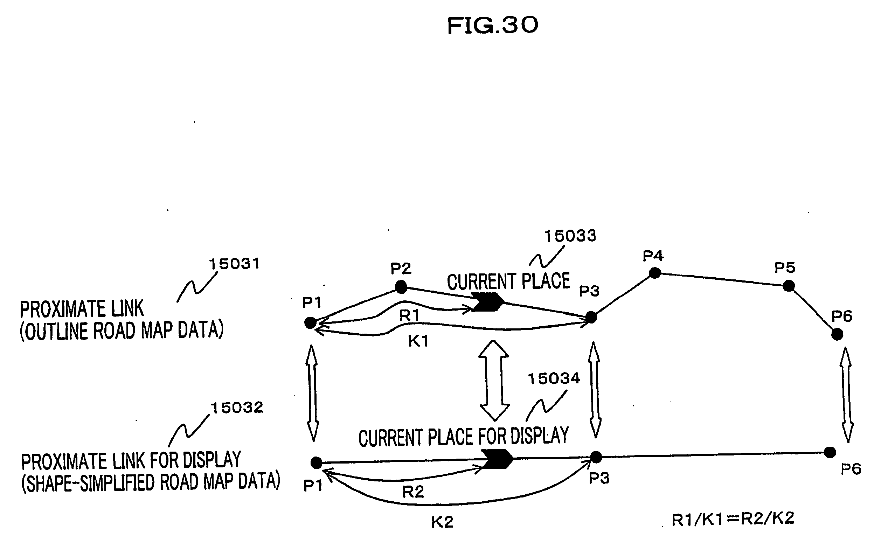

Fig. 30 is a drawing for illustrating the determining process of the current place for displaying. Here, a reference 15031 denotes a proximate link on the recommended route indicated by the outline road map data, a reference 15032 is a link (referred to as proximate link for displaying) having the same link ID as the proximate link on the recommended route indicated by the shape-simplified road map data. First, the route guiding part 404 identifies coordinate values having the same coordinate value ID as the coordinate value forming the proximate link for displaying from the coordinate value string forming the proximate link. In an example shown in Fig. 30, coordinate values having coordinate value ID of P1, P3, and P6 (refereed to as common coordinate values) are identified. Next, the common coordinate values located just before and after a current place 15033 subject to the map matching are identified. In an example shown in Fig 30, the coordinate values having the coordinate value ID of P1 and P3 (referred to as notice coordinate values) are identified. Next, a length K1 of a line segment connecting noted coordinate values of the proximate line and a length R1 from the start point P1 of the line segment to the current pace 15033 are calculated. Next, a length K2 of the line segment connecting the noted coordinate values of the proximate link for displaying is calculated and K2 × (R1/K1) is determined as a length R2 from the starting point P1 of the proximate link for displaying to the current place for displaying 15034. More specifically, the current place 15034 for displaying is set such that R1/K1 = R2/K2.

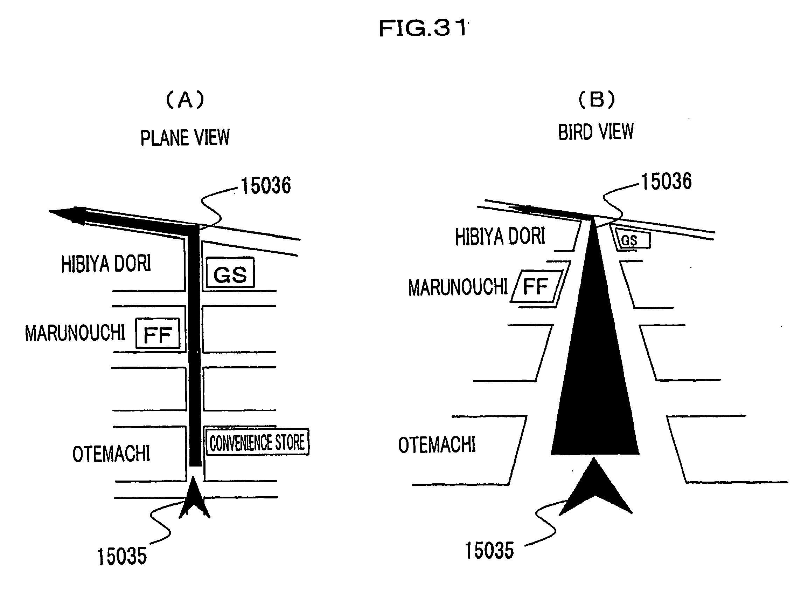

Fig. 31 shows a display example of a shape-simplified road map. Here, Fig. 31 (A) shows an example of a plane view of the shape-simplified road map and Fig. 31 (B) shows an example of a bird view display of the shape-simplified road map. In addition, a view point of the bird view can be determined at, for example, a position backward and above the current place. As shown in the drawing, a vehicle mark 15035 indicating the current place for displaying and the recommended route 15036 in which the road shape is simplified is displayed on the display screen of the navigation terminal 2 together with the shape-simplified road map. Further, the display screen image of the navigation terminal 2 can be made to have two display screen images to display both of the surface display map shown in Fig. 31 (A) and the bird view display map shown in Fig 31 (B). In addition, in the examples shown in Fig. 31, the recommended route is displayed such that the traveling direction is shown from the lower part to the upper part of the display screen image. However, for example, in a case of a wide display screen such as 1DIN type of a display screen, the recommended route may be displayed such that the traveling direction is directed from the left to the right (or the right to left) of the display screen.

Next, the route guiding part 204 judges whether or not the current place subject to the map matching on the recommended route indicated by the outline road map data is adjacent to the guidance-required intersection (S1504), and more specifically, extracts coordinate values located in the traveling direction from the current place subject to the map-matching and within a predetermined distance (for example, 300 m) from the current place from the coordinate value string forming the recommended route. Next, it is checked whether or not intersection guidance information having the correspondence to the coordinate value ID of the extracted coordinate values from the intersection guidance information stored in the delivery information storing part 205. If there is such intersection information, it is judged that the current place is adjacent to the guidance-required intersection.

Next, when the current place is adjacent to the guidance-required intersection (Yes, in S1504), the route guiding part 204 reads out the intersection guidance information having the correspondence to the guidance-required intersection from the delivery information storing part 205 to display a message according to the information on the display part 203, or a sound output is made from a sound output device (not shown) (S1505).

Next, the route guiding part 204 judges whether or not the current place subject to the map matching on the recommended route indicated by the outline road map data is adjacent to the guidance notice point (S1506) and, more specifically, extracts coordinate values located in the traveling direction in front of the current place subject to the map matching on the recommended route indicated by the outline data and within a predetermined distance (for example 300 m) from the current place from the coordinate value string forming the recommended route. Next, it is checked whether or not there is the guidance notice information having correspondence to the coordinate value ID of the extracted coordinate values in the guidance notice information stored in the delivery information storing part 205. If there is such guidance notice information, it is judged that the current place is adjacent to the guidance notice point.

Next, when the current place is adjacent to the guidance notice point, the route guiding part 204 reads out the guidance notice information having correspondence to the guidance notice point from the delivery information storing part 205 to display a message according to the information on the display part 203, or vocally output from the voice output device (not shown) (S1507), returning to S1501.

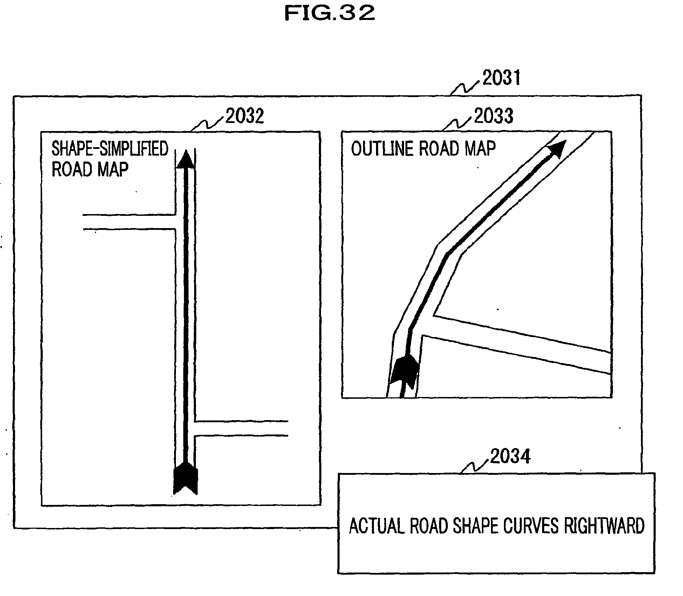

Fig. 32 shows an output example of the guidance notice information of the navigation terminal 2. In this example, a display screen image 2031 is made to have two screen images in which a shape-simplified road map 2032 indicated by the shape-simplified road map data adjacent to the current place for displaying is displayed on one side and, on the other side, an outline road map (enlarged map) 2033 indicated by the outline road map data around the current place subject to the map matching is displayed. Further, according to the guidance notice information a message, for example, "actual road shape curves rightward" 2034, is vocally outputted.

On the other hand, when the processing proceeds from S1502 to S1508, the route guiding part 204 transmits again to the navigation server 1 the route guiding request with assumption that the current place not subject to the map-matching (the current place obtained from the current place detecting part 210) is a departure place. In response to this, the navigation server 1 searches the recommended route again by executing the process after S2 in Fig. 11 and transmits the delivery information including the information of the recommended route to the navigation terminal 2. Upon receiving the delivery information the navigation terminal 2 determines this as new delivery information for the route guidance to store it in the delivery information recording part 205 (S1509). Further, the coordinate value string of the recommended route included in the shape-simplified road map data in the delivery information used for the route guidance till then is stored as the coordinate value string of an old recommended route to display this on a display area of the shape-simplified road map on the navigation terminal 2 with superimposition (S1510). Next, the processing returns to S1501. Further, if the current place is not subject to the map-matching, the current place not subject to the map-matching is displayed on the shape-simplified road map as the current place for display.

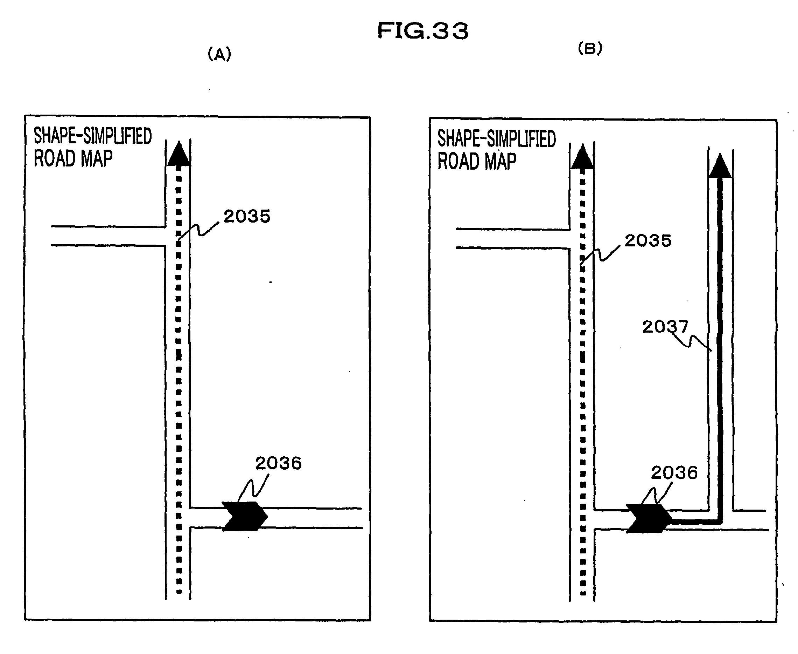

Fig. 33 is an example of displaying the shape-simplified road map upon deviation from a route in which Fig. 33 (A) shows a display screen image before new delivery information is obtained from the navigation server 1 and Fig. 33 (B) shows the display screen image after the delivery information is obtained. As shown in Fig. 33(A), before the new delivery information is obtained a display mode of a recommended route 2035 used for the route guidance till then is changed (from the broken line to a solid line in the example shown in Fig. 33) as well as a current place 2036 for display is displayed at a location remote from the recommended route 2035. On the other hand, as shown in Fig. 33 (B), when the new delivery information is obtained, a recommended route 2037 indicated by the shape-simplified road map data in the newly obtained delivery information is displayed on the display screen image in Fig. 33 (A).

As mentioned above, the one embodiment of the present invention has been described.

According to the embodiment, the shape-simplified map data is generated in which the road shape of the guiding route is simplified. Further, for the noted part where the difference in the shape from the guiding route indicated by the outline road map data is large out of the guiding route indicated by the shape-simplified road map data, the guidance notice information is generated on the basis of the difference. Therefore, the visibility of the guidance route can be improved by displaying the road map (shape-simplified road map) on the basis of the shape-simplified road map data. Further, at the noted part of the guiding route the guidance notice information is outputted to reduce the possibility of mistaking the guiding direction.

In addition, the present invention is not limited to the above-mentioned embodiment, but various modifications are possible within the scope thereof. For example, the above-mentioned embodiment has been described such that the navigation server 1 for generating the route guidance information (delivery information) and the navigation terminal 2 for performing the route guidance in accordance with the route guidance information are separate apparatuses. However, the present invention is not limited thereto. The navigation terminal 1 may generate the route guidance information by adding the configuration of the navigation server 1 to the navigation terminal 2.

Further, in the embodiment, the shape-simplified road map data is generated from the outline road map data in which the roads other than the roads forming the recommended route and the roads intersecting the recommended route are omitted as well as the POI located adjacent to the roads forming the recommended route and the roads intersecting the recommended route and POI other than the background and the backgrounds are omitted. However, the present invention is not limited to this. The shape-simplified road map data may be directly generated from the map data including the recommended route (map data in which map forming objects are not omitted). In this case the outline road map generating part 105 is unnecessary.

### INDUSTRIAL APPLICABILITY

As mentioned above, the navigation apparatus according to the present invention is useful for the navigation apparatus for displaying the road map, and particularly suitable in using for a navigation apparatus for displaying the road map in which the visibility of the guiding route is improved.

## Claims

1. A navigation apparatus (1) for transmitting information of a guiding route to a navigation terminal (2) for performing route guidance of a moving object, including:
communication means (110) adapted to perform communication with the navigation terminal;
map data storing means (102) adapted to store map data;
route searching means (104) adapted to search, using the map data, a guiding route between a departure place and a destination received from the navigation terminal through the communication means;
shape-simplified road map data generating means (106) adapted to generate, using the map data, shape-simplified road map data which includes at least the guiding route and a road intersecting the recommended route and in which a road shape of the guiding route is simplified;
**characterized by**
notice part detecting means (107) adapted to detect as a notice part a part of the guiding route having a difference greater than a predetermined quantity between a shape of the guiding route in the map data and the shape of the guiding route in the shape-simplified road map data;
guidance notice information generating means (108) adapted to generate, on the basis of the difference at the notice part between the map data and the shape-simplified road map data, guidance notice information to be supplied to the navigation terminal when the moving object reaches the notice part in the route guidance; and
information delivering means (109) adapted to transmit delivery information including the shape-simplified road map data and the guidance notice information to the navigation terminal using the communication means.

2. A navigation apparatus for performing route guidance of a moving object, including:
map data storing means adapted to store map data;
setting means adapted to receive settings of a departure place and a destination;
route searching means adapted to search, using the map data, a guiding route between the departure place and the destination;
shape-simplified road map data generating means adapted to generate, using the map data, shape-simplified road map data which includes at least the guiding route and a road intersecting the recommended route and in which a road shape of the guiding route is simplified;
**characterized by**
notice part detecting means adapted to detect as a notice part a part of the guiding route having a difference greater than a predetermined quantity between a shape of the guiding route in the map data and the shape of the guiding route in the shape-simplified road map data; and
guidance notice information generating means adapted to generate, on the basis of the difference at the notice part between the map data and the shape-simplified road map data, guidance notice information to be outputted when the moving object reaches the notice part in the route guidance.

3. The navigation apparatus as claimed in any of claim 1 or 2, **characterized in that** the shape-simplified road map data generating means is adapted to perform a process of thinning coordinate values from a coordinate value string forming the guiding route.

4. The navigation apparatus as claimed in any of claim 1 or 2, **characterized in that** the shape-simplified road map data generating means is adapted to perform a process of moving the coordinate values at a connection part between the guiding route and the road intersecting the guiding route.

5. The navigation apparatus as claimed in any of claim 1 or 2, **characterized in that** the shape-simplified road map data generating means is adapted to perform a process of rotating a map forming object of the shape-simplified road map with respect to the departure place of the guiding route.

6. The navigation apparatus as claimed in any of claim 1 or 2, **characterized in that** the notice part detecting means is adapted to detect, with respect to the coordinate values forming the coordinate value string of the guiding route in the road map data, the coordinate values as the notice part when an angle made between a first line section, forming the guiding route, having a start point or an end point at the coordinate values and a second line section of the guiding route in the shape-simplified road map data, corresponding to the first section is equal to or greater than a predetermined value.

7. The navigation apparatus as claimed in any of claim 1 or 2, **characterized in that** the guidance notice information generating means is adapted to generate the guidance notice information for each of coordinate values detected as the notice part and a plurality of coordinate values following the coordinates out of the coordinate values forming the coordinate value string of the guiding route in the road map data on the basis of increase and decrease trends in an angle made between a first line section having a start point or an end point at the coordinate values and a second line section of the guiding route in the shape-simplified road map data, corresponding to the first line section.

8. A route guiding method in which information of a guiding route is transmitted by a navigation apparatus to a navigation terminal for performing route guidance of a moving object, including:
a route searching step of searching, using map data stored in map data storing means, a guiding route between a departure place and a destination received from the navigation terminal;
a shape-simplified road map data generating step of generating, using the map data, shape-simplified road map data which includes at least the guiding route and a road intersecting the guiding route and in which a road shape of the guiding route is simplified;
**characterized by**
a notice part detecting step of detecting as a notice part a part of the guiding route having a difference greater than a predetermined quantity between a shape of the guiding route in the map data and the shape of the guiding route in the shape-simplified road map data;
a guidance notice information generating step of generating, on the basis of the difference in the notice part between the map data and the shape-simplified road map data, guidance notice information to be supplied to the navigation terminal when the moving object reaches the notice part in the route guidance; and
an information delivering step of transmitting delivery information including the shape-simplified road map data and the guidance notice information to the navigation terminal.

9. A route guiding method in which a navigation apparatus performs route guidance of a moving object, comprising:
a setting step of receiving settings of a departure place and a destination;
a route searching step of searching, using the map data stored in map data storing means, a guiding route between the departure place and the destination;
a shape-simplified road map data generating step of generating, using the map data, shape-simplified road map data which includes at least the guiding route and a road intersecting the guiding route and in which a road shape of the guiding route is simplified;
**characterized by**
a notice part detecting step of detecting as a notice part a part of the guiding route having a difference greater than a predetermined quantity between a shape of the guiding route in the map data and the shape of the guiding route in the shape-simplified road map data; and
a guidance notice information generating step of generating, on the basis of the difference at the notice part between the map data and the shape-simplified road map data, guidance notice information to be outputted when the moving object reaches the notice part in the route guidance.

## Patentansprüche

1. Navigationsvorrichtung (1) zum Übertragen von Information über eine Leitstrecke an ein Navigationsendgerät (2) zur Durchführung einer Streckenlenkung eines beweglichen Objekts, mit:
einer Kommunikationseinrichtung (110), die dazu ausgelegt ist, eine Kommunikation mit dem Navigationsendgerät durchzuführen;
einer Kartendatenspeichereinrichtung (102), die dazu ausgelegt ist, Kartendaten zu speichern;
einer Streckensucheinrichtung (104), die dazu ausgelegt ist, unter Verwendung der Kartendaten eine Leitstrecke zwischen einem Abfahrtsort und einem Ziel zu suchen, das vom Navigationsendgerät durch die Kommunikationseinrichtung empfangen wird;
einer Formvereinfachte-Straßenkartendaten-Erzeugungseinrichtung (106), die dazu ausgelegt ist, unter Verwendung der Kartendaten formvereinfachte Straßenkartendaten zu erzeugen, die zumindest die Leitstrecke und eine Straße einschließen, welche die empfohlene Strecke schneidet, und in welchen eine Straßenform der Leitstrecke vereinfacht ist;
**gekennzeichnet durch**
eine Hinweisteil-Erfassungseinrichtung (107), die dazu ausgelegt ist, als Hinweisteil einen Teil der Leitstrecke zu erfassen, der einen Unterschied aufweist, der größer als eine vorgegebene Menge zwischen einer Form der Leitstrecke in den Kartendaten und der Form der Leitstrecke in den formvereinfachten Straßenkartendaten ist;
eine Leithinweis-Informationserzeugungseinrichtung (108), die dazu ausgelegt ist, auf der Grundlage des Unterschieds des Hinweisteils zwischen den Kartendaten und den formvereinfachten Straßenkartendaten eine Leithinweisinformation zu erzeugen, die dem Navigationsendgerät zugeführt werden soll, wenn das bewegliche Objekt den Hinweisteil in der Streckenlenkung erreicht; und
eine Informationsliefereinrichtung (109), die dazu ausgelegt ist, Lieferinformation einschließlich der formvereinfachten Straßenkartendaten und der Leithinweisinformation an das Navigationsendgerät unter Verwendung der Kommunikationseinrichtung zu übertragen.

2. Navigationsvorrichtung zur Durchführung einer Streckenlenkung eines beweglichen Objekts, mit:
einer Kartendatenspeichereinrichtung, die dazu ausgelegt ist, Kartendaten zu speichern;
einer Einstelleinrichtung, die dazu ausgelegt ist, Einstellungen eines Abfahrtsorts und eines Ziels zu empfangen;
einer Streckensucheinrichtung, die dazu ausgelegt ist, unter Verwendung der Kartendaten eine Leitstrecke zwischen dem Abfahrtsort und dem Ziel zu suchen;
einer Formvereinfachte-Straßenkartendaten-Erzeugungseinrichtung, die dazu ausgelegt ist, unter Verwendung der Kartendaten formvereinfachte Straßenkartendaten zu erzeugen, die zumindest die Leitstrecke und eine Straße einschließen, welche die empfohlene Strecke schneidet, und in welchen eine Straßenform der Leitstrecke vereinfacht ist;
**gekennzeichnet durch**
eine Hinweisteil-Erfassungseinrichtung, die dazu ausgelegt ist, als Hinweisteil einen Teil der Leitstrecke zu erfassen, der einen Unterschied aufweist, der größer als eine vorgegebene Menge zwischen einer Form der Leitstrecke in den Kartendaten und der Form der Leitstrecke in den formvereinfachten Straßenkartendaten ist; und
eine Leithinweis-Informationserzeugungseinrichtung, die dazu ausgelegt ist, auf der Grundlage des Unterschieds des Hinweisteils zwischen den Kartendaten und den formvereinfachten Straßenkartendaten eine Leithinweisinformation zu erzeugen, die ausgegeben werden soll, wenn das bewegliche Objekt den Hinweisteil in der Streckenlenkung erreicht.

3. Navigationsvorrichtung nach irgendeinem der Ansprüche 1 oder 2, **dadurch gekennzeichnet, dass** die Formvereinfachte-Straßenkartendaten-Erzeugungseinrichtung dazu ausgelegt ist, einen Vorgang des Ausdünnens von Koordinatenwerten aus einer Koordinatenwertreihung, die die Leitstrecke bildet, durchzuführen.

4. Navigationsvorrichtung nach irgendeinem der Ansprüche 1 oder 2, **dadurch gekennzeichnet, dass** die Formvereinfachte-Straßenkartendaten-Erzeugungseinrichtung dazu ausgelegt ist, einen Vorgang des Bewegens der Koordinatenwerte an einem Verbindungsteil zwischen der Leitstrecke und der Straße, die die Leitstrecke schneidet, durchzuführen.

5. Navigationsvorrichtung nach irgendeinem der Ansprüche 1 oder 2, **dadurch gekennzeichnet, dass** die Formvereinfachte-Straßenkartendaten-Erzeugungseinrichtung dazu ausgelegt ist, einen Vorgang des Drehens eines kartenbildenden Objekts der formvereinfachten Straßenkarte in Bezug auf den Abfahrtsort der Leitstrecke durchzuführen.

6. Navigationsvorrichtung nach irgendeinem der Ansprüch 1 oder 2, **dadurch gekennzeichnet, dass** die Hinweisteil-Erfassungseinrichtung dazu auslegt ist, in Bezug auf die Koordinatenwerte, die die Koordinatenwertreihung der Leitstrecke in den Straßenkartendaten bilden, die Koordinatenwerte als den Hinweisteil zu erfassen, wenn ein Winkel, der zwischen einem ersten Linienabschnitt, der die Leitstrecke bildet und einen Anfangspunkt oder einen Endpunkt an den Koordinatenwerten hat, und einem zweiten Linienabschnitt der Leitstrecke in den formvereinfachten Straßenkartendaten entsprechend dem ersten Abschnitt gebildet ist, gleich oder größer als ein vorgegebener Wert ist.

7. Navigationsvorrichtung nach irgendeinem der Ansprüche 1 oder 2, **dadurch gekennzeichnet, dass** die Leithinweis-Informationserzeugungseinrichtung dazu ausgelegt ist, die Leithinweisinformation für jeden von Koordinatenwerten, die als der Hinweisteil erfasst werden, und mehrere Koordinatenwerte, die den Koordinaten aus den Koordinatenwerten folgen, welche die Koordinatenwertreihung der Leitstrecke in den Straßenkartendaten bilden, auf der Grundlage von Zunahme- und Abnahmetrends in einem Winkel zu erzeugen, der zwischen einem ersten Linienabschnitt, der einen Anfangspunkt oder einen Endpunkt an den Koordinatenwerten hat, und einem zweiten Linienabschnitt der Leitstrecke in den formvereinfachten Straßenkartendaten entsprechend dem ersten Linienabschnitt gebildet ist.

8. Streckenlenkungsverfahren, bei dem Information über eine Leitstrecke von einer Navigationsvorrichtung an ein Navigationsendgerät zur Durchführung einer Streckenlenkung eines beweglichen Objekts übertragen wird, mit:
einem Streckensuchschritt zum Suchen einer Leitstrecke zwischen einem Abfahrtsort und einem Ziel, das vom Navigationsendgerät empfangen wird, unter Verwendung von in der Kartendatenspeichereinrichtung gespeicherten Kartendaten;
einem Formvereinfachte-Straßenkartendaten-Erzeugungsschritt zum Erzeugen von formvereinfachten Straßenkartendaten, die zumindest die Leitstrecke und eine Straße einschließen, welche die Leitstrecke schneidet, und in welchen eine Straßenform der Leitstrecke vereinfacht ist, unter Verwendung der Kartendaten;
**gekennzeichnet durch**
einen Hinweisteil Erfassungsschritt zum Erfassen eines Teils der Leitstrecke als Hinweisteil, der einen Unterschied aufweist, der größer als eine vorgegebene Menge zwischen einer Form der Leitstrecke in den Kartendaten und der Form der Leitstrecke in den formvereinfachten Straßenkartendaten ist;
einen Leithinweis-Informationserzeugungsschritt zum Erzeugen einer Leithinweisinformation auf der Grundlage des Unterschieds des Hinweisteils zwischen den Kartendaten und den formvereinfachten Straßenkartendaten, die dem Navigationsendgerät zugeführt werden soll, wenn das bewegliche Objekt den Hinweisteil in der Streckenlenkung erreicht; und
einen Informationslieferschritt zum Übertragen von Lieferinformation einschließlich der formvereinfachten Straßenkartendaten und der Leithinweisinformation an das Navigationsendgerät.

9. Streckenlenkungsverfahren, bei dem eine Navigationsvorrichtung eine Streckenlenkung eines beweglichen Objekts durchführt, mit:
einem Einstellschritt zum Empfangen von Einstellungen eines Abfahrtsorts und eines Ziels;
einem Streckensuchschritt zum Suchen einer Leitstrecke zwischen dem Abfahrtsort und dem Ziel unter Verwendung der in der Kartendatenspeichereinrichtung gespeicherten Kartendaten;
einem Formvereinfachte-Straßenkartendaten-Erzeugungsschritt zum Erzeugen von formvereinfachten Straßenkartendaten, die zumindest die Leitstrecke und eine Straße einschließen, welche die Leitstrecke schneidet, und in welchen eine Straßenform der Leitstrecke vereinfacht ist, unter Verwendung der Kartendaten;
**gekennzeichnet durch**
einen Hinweisteil-Erfassungsschritt zum Erfassen eines Teils der Leitstrecke als Hinweisteil, der einen Unterschied aufweist, der größer als eine vorgegebene Menge zwischen einer Form der Leitstrecke in den Kartendaten und der Form der Leitstrecke in den formvereinfachten Straßenkartendaten ist; und
einen Leithinweis-Informationserzeugungsschritt zum Erzeugen einer Leithinweisinformation auf der Grundlage des Unterschieds des Hinweisteils zwischen den Kartendaten und den formvereinfachten Straßenkartendaten, die ausgegeben werden soll, wenn das bewegliche Objekt den Hinweisteil in Streckenlenkung erreicht.

## Revendications

1. Dispositif de navigation (1) pour transmettre des informations d'un trajet de guidage à un terminal de navigation (2) pour effectuer un guidage de trajet d'un objet mobile, incluant :
des moyens de communication (110) adaptés pour exécuter une communication avec le terminal de navigation,
des moyens de mémorisation de données de carte (102) adaptés pour mémoriser des données de carte,
des moyens de recherche de trajet (104) adaptés pour rechercher, en utilisant les données de carte, un trajet de guidage entre un lieu de départ et une destination reçu en provenance du terminal de navigation via les moyens de communication,
des moyens de génération de données de carte routière de forme simplifiée (106) adaptés pour générer, en utilisant les données de carte, des données de carte routière de forme simplifiée qui incluent au moins le trajet de guidage et une route coupant le trajet recommandé et dans lesquelles une forme de route du trajet de guidage est simplifiée, **caractérisé par**
des moyens de détection de partie de conseil (107) adaptés pour détecter en tant que partie de conseil une partie du trajet de guidage ayant une différence supérieure à une quantité prédéterminée entre une forme du trajet de guidage dans les données de carte et la forme du trajet de guidage dans les données de carte routière de forme simplifiée,
des moyens de génération d'informations de conseil de guidage (108) adaptés pour générer, sur la base de la différence au niveau de la partie de conseil entre les données de carte et les données de carte routière de forme simplifiée, des informations de conseil de guidage à délivrer au terminal de navigation lorsque l'objet mobile atteint la partie de conseil dans le guidage de trajet, et
des moyens de délivrance d'informations (109) adaptés pour transmettre des informations incluant les données de carte routière de forme simplifiée et les informations de conseil de guidage au terminal de navigation en utilisant les moyens de communication.

2. Dispositif de navigation pour effectuer un guidage de trajet d'un objet mobile, incluant :
des moyens de mémorisation de données de carte adaptés pour mémoriser des données de carte,
des moyens d'établissement adaptés pour recevoir des informations d'établissement d'un lieu de départ et d'une destination,
des moyens de recherche de trajet adaptés pour rechercher, en utilisant les données de carte, un trajet de guidage entre le lieu de départ et la destination,
des moyens de génération de données de carte routière de forme simplifiée adaptés pour générer, en utilisant les données de carte, des données de carte routière de forme simplifiée qui incluent au moins le trajet de guidage et une route coupant le trajet recommandé et dans lesquelles une forme de route du trajet de guidage est simplifiée, **caractérisé par**
des moyens de détection de partie de conseil adaptés pour détecter en tant que partie de conseil une partie du trajet de guidage ayant une différence supérieure à une quantité prédéterminée entre une forme du trajet de guidage dans les données de carte et la forme du trajet de guidage dans les données de carte routière de forme simplifiée, et
des moyens de génération d'informations de conseil de guidage adaptés pour générer, sur la base de la différence au niveau de la partie de conseil entre les données de carte et les données de carte routière de forme simplifiée, des informations de conseil de guidage à délivrer en sortie lorsque l'objet mobile atteint la partie de conseil dans le guidage de trajet.

3. Dispositif de navigation comme revendiqué dans l'une quelconque des revendications 1 ou 2, **caractérisé en ce que** les moyens de génération de données de carte routière de forme simplifiée sont adaptés pour exécuter un processus visant à réduire des valeurs de coordonnées à partir d'une chaîne de valeurs de coordonnées formant le trajet de guidage.

4. Dispositif de navigation comme revendiqué dans l'une quelconque des revendications 1 ou 2, **caractérisé en ce que** les moyens de génération de données de carte routière de forme simplifiée sont adaptés pour exécuter un processus de déplacement des valeurs de coordonnées au niveau d'une partie de connexion entre le trajet de guidage et la route coupant le trajet de guidage.

5. Dispositif de navigation comme revendiqué dans l'une quelconque des revendications 1 ou 2, **caractérisé en ce que** les moyens de génération de données de carte routière de forme simplifiée sont adaptés pour exécuter un processus de rotation d'un objet formant carte de la carte routière de forme simplifiée par rapport au lieu de départ du trajet de guidage.

6. Dispositif de navigation comme revendiqué dans l'une quelconque des revendications 1 ou 2, **caractérisé en ce que** les moyens de détection de partie de conseil sont adaptés pour détecter, par rapport aux valeurs de coordonnées formant la chaîne de valeurs de coordonnées du trajet de guidage dans les données de carte routière, les valeurs de coordonnées en tant que partie de conseil lorsqu'un angle formé entre une première section de ligne, formant le trajet de guidage, ayant un point de départ ou un point de fin au niveau des valeurs de coordonnées et une seconde section de ligne du trajet de guidage dans les données de carte routière de forme simplifiée, correspondant à la première section est égal ou supérieur à une valeur prédéterminée.

7. Dispositif de navigation comme revendiqué dans l'une quelconque des revendications 1 ou 2, **caractérisé en ce que** les moyens de génération d'informations de conseil de guidage sont adaptés pour générer les informations de conseil de guidage pour chacune des valeurs de coordonnées détectées en tant que partie de conseil et une pluralité de valeurs de coordonnées suivant les coordonnées parmi les valeurs de coordonnées formant la chaîne de valeurs de coordonnées du trajet de guidage dans les données de carte routière sur la base de tendances à l'accroissement ou à la diminution d'un angle formé entre une première section de ligne ayant un point de départ ou un point de fin au niveau des valeurs de coordonnées et une seconde section de ligne du trajet de guidage dans les données de carte routière de forme simplifiée, correspondant à la première section de ligne.

8. Procédé de guidage de trajet dans lequel des informations d'un trajet de guidage sont transmises par un appareil de navigation à un terminal de navigation pour exécuter un guidage de trajet d'un objet mobile, incluant :
une étape de recherche de trajet consistant à rechercher, en utilisant des données de carte mémorisées dans des moyens de mémorisation de données de carte, un trajet de guidage entre un lieu de départ et une destination reçu en provenance du terminal de navigation,
une étape de génération de données de carte routière de forme simplifiée consistant à générer, en utilisant les données de carte, des données de carte routière de forme simplifiée lesquelles incluent au moins le trajet de guidage et une route coupant le trajet de guidage et dans lesquelles une forme de route du trajet de guidage est simplifiée,
**caractérisé par**
une étape de détection de partie de conseil consistant à détecter en tant que partie de conseil une partie du trajet de guidage ayant une différence supérieure à une quantité prédéterminée entre une forme du trajet de guidage dans les données de carte et la forme du trajet de guidage dans les données de carte routière de forme simplifiée,
une étape de génération d'informations de conseil de guidage consistant à générer, sur la base de la différence dans la partie de conseil entre les données de carte et les données de carte routière de forme simplifiée, des informations de conseil de guidage à délivrer au terminal de navigation lorsque l'objet mobile atteint la partie de conseil dans le guidage de trajet, et
une étape de délivrance d'informations consistant à transmettre des informations incluant les données de carte routière de forme simplifiée et les informations de conseil de guidage au terminal de navigation.

9. Procédé de guidage de trajet dans lequel un appareil de navigation exécute un guidage de trajet d'un objet mobile, comportant :
une étape d'établissement consistant à recevoir des informations d'établissement d'un lieu de départ et d'une destination,
une étape de recherche de trajet consistant à rechercher, en utilisant les données de carte mémorisées dans des moyens de mémorisation de données de carte, un trajet de guidage entre le lieu de départ et la destination,
une étape de génération de données de carte routière de forme simplifiée consistant à générer, en utilisant les données de carte, des données de carte routière de forme simplifiée qui incluent au moins le trajet de guidage et une route coupant le trajet de guidage et dans laquelle une forme de route du trajet de guidage est simplifiée,
**caractérisé par**
une étape de détection de partie de conseil consistant à détecter en tant que partie de conseil une partie du trajet de guidage ayant une différence supérieure à une quantité prédéterminée entre une forme du trajet de guidage dans les données de carte et la forme du trajet de guidage dans les données de carte routière de forme simplifiée, et
une étape de génération d'informations de conseil de guidage consistant à générer, sur la base de la différence au niveau de la partie de conseil entre les données de carte et les données de carte routière de forme simplifiée, des informations de conseil de guidage à délivrer en sortie lorsque l'objet mobile atteint la partie de conseil dans le guidage de trajet.
